(19) Europäisches Patentamt
European Patent Office
Office européen des brevets

(11) EP 1 839 978 B1

(12) **EUROPEAN PATENT SPECIFICATION**

(45) Date of publication and mention of the grant of the patent:
**23.12.2009 Bulletin 2009/52**

(51) Int Cl.:
***B60T 8/17*** *(2006.01)*

(21) Application number: **07006239.3**

(22) Date of filing: **27.03.2007**

(54) **Brake control device for motorcycle**

Bremsregelsystem für ein Motorrad

Dispositif de commande de frein pour motocyclette

(84) Designated Contracting States:
**DE ES GB IT**

(30) Priority: **28.03.2006 JP 2006087415**

(43) Date of publication of application:
**03.10.2007 Bulletin 2007/40**

(73) Proprietor: **NISSIN KOGYO CO., LTD.**
**Ueda-shi,**
**Nagano (JP)**

(72) Inventor: **Hasegawa, Tetsuya**
**c/o NISSIN KOGYO CO., LTD.**
**Nagano, (JP)**

(74) Representative: **HOFFMANN EITLE**
**Patent- und Rechtsanwälte**
**Arabellastrasse 4**
**81925 München (DE)**

(56) References cited:
**EP-A1- 0 550 849**
**EP-A2- 0 537 724**
**DE-A1-102005 054 557**
**US-A- 5 386 366**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

The present invention relates to a brake control device for the motorcycle preventing wheel lock at the time of braking the motorcycle.

2. Description of Related Art

There is known a brake control system using an ABS system to prevent a so-called "rear wheel lift-up (also referred to as rear wheel load releasing, jackknife, or rear lift-up)" that load applied to wheels is shifted from a rear wheel to a front wheel so that a rear wheel is lifted up at the time of braking a vehicle, particularly, at the time of strongly decelerating the vehicle.
The known brake control system prevents the rear wheel lift-up by setting an incremental gradient of brake force of a front wheel brake mechanism to a predetermined incremental gradient smaller than a normal incremental gradient when deceleration of the vehicle after starting the braking and time variation amount of the deceleration of the vehicle exceed respective predetermined values (see JP-A-06-255468).

The known brake control system controls a brake force incremental gradient of a front brake mechanism by using an ABS system. That is, since the known brake control system repeatedly controls a braking state of the front brake mechanism to a increasing pressure-state or a holding state, the brake force fluctuates whenever the brake force is boosted, more specifically, whenever the braking state is switched from the increasing-pressure-state to the holding state. Accordingly, in order to set a target control value of a vehicle deceleration and control the vehicle deceleration so as not to exceed the target control value even under a brake force having fluctuating peaks, it is necessary to set the target control value to a value sufficiently smaller than a limit vehicle deceleration with which a rear wheel lift-up is caused.
However, when the target control value is set to a value sufficiently smaller than the limit vehicle deceleration, a driver can only obtain deceleration lower than the desired deceleration.

A brake control device according to the preamble of claim 1 is known from document EP 0537724.

SUMMARY OF THE INVENTION

The present invention is contrived to solve the problem described above, and its object is to provide a brake control device for the motorcycle capable of assuredly controlling the rear wheel lift-up and realizing higher braking performance.

To solve the above-described problem, according to a first aspect of the invention, there is provided a brake control device for a motorcycle comprising:

a front wheel brake mechanism mounted on a front wheel;
a rear wheel brake mechanism mounted on a rear wheel; and
a brake force control unit that controls a brake force generated in the front and rear wheel brake mechanism,
wherein the brake control device prevents a wheel from being locked at the time of braking,
the brake control device is characterized in that the brake control device comprises:

a deceleration monitoring value obtaining unit that obtains a deceleration monitoring value associated with a deceleration of the motorcycle;
a target control value setting unit that sets a target control value associated with a limit deceleration monitoring value with which a rear wheel lift-up is caused at the time of braking; and
a brake force incremental gradient setting unit that repeatedly sets a brake force incremental gradient of the front wheel brake mechanism so that the incremental gradient, in a case where a difference between the set target control value and the obtaind deceleration monitoring value is small, becomes smaller than the incremental gradient in a case where the difference is large,
wherein the brake force control unit controls the brake force of the front wheel brake mechanism on the basis of the set brake force incremental gradient.

The deceleration monitoring value is a value associated with the deceleration of the motorcycle. Examples of the deceleration monitoring value are, front wheel deceleration and a front wheel cylinder pressure which is a front wheel brake force.
The target control value is a target value for controlling the deceleration monitoring value, is associated with the limit deceleration monitoring value, and does not exceed the limit deceleration monitoring value.
The limit deceleration monitoring value is the smallest deceleration monitoring value that causes the rear wheel lift-up.

As the brake force incremental gradient decreases, brake force pulsation decreases. In accordance with such a configuration, the brake force of the front wheel brake mechanism decreases as the deceleration monitoring value after starting the braking of the front wheel approaches the target control value. Accordingly, it is possible to prevent the brake force pulsation from raising the deceleration monitoring value of the motorcycle to a value greater than the limit deceleration monitoring value. Therefore, it is possible to increase and set the target control value to a value closer to the limit deceleration monitoring value, thereby preventing the rear wheel lift-up more assuredly and realizing higher braking performance.

It is preferable that the brake force control unit controls the brake force of the front wheel brake mechanism to a holding state when the obtaind deceleration monitoring value exceeds a given value and approaches the set target control value.

The given value is, for example, a value slightly smaller than the target control value.

In accordance with such a configuration, since the brake force of the front wheel brake mechanism is controlled to be in the holding state when the deceleration monitoring value sufficiently approaches the target control value, it is possible to eliminate the fluctuation of the brake force. Accordingly, it is possible to prevent the deceleration monitoring value of the motorcycle from exceeding the limit deceleration monitoring value. As a result, it is possible to prevent the rear wheel lift-up more assuredly and realize higher braking performance.

It is preferable that the brake control device for the motorcycle further comprising:

an elapsed time determining unit that determines whether an elapsed time after starting the braking of the motorcycle is within a reference time required for stabilizing a variation in load resulting from a load shift between the front and rear wheels,
wherein the target control value setting unit sets the target control value such that the target control value, which is for the case where it is determined that the elapsed time is within the reference time, is smaller than that, which is for the case where it is determined that the elapsed time exceeds the reference time.

When the elapsed time is within the reference time, since a load of the motorcycle is in an unstable state, the limit deceleration monitoring value for the case where the elapse time is within the reference time becomes smaller than that for the case where the elapsed time exceeds the reference time. Therefore, the target control value for the case where the elapsed time is within the reference time is set to a value smaller than that for the case where the elapsed time exceeds the reference time. Accordingly, it is possible to perform a control operation in a manner that different limit deceleration monitoring values are set in accordance with the states of the motorcycle. As a result, it is possible to prevent the rear wheel lift-up while preventing the brake force of the front wheel brake mechanism from decreasing.

It is preferable that the brake control device for the motorcycle further comprising a vehicle speed monitoring value obtaining unit that obtaining a vehicle speed monitoring value associated with a vehicle speed,
wherein the elapsed time determining unit comprises:

a reference time setting unit setting the reference time on the basis of the vehicle speed monitoring value obtaind at the time of starting the braking of the front wheel brake mechanism, and
an elapsed time determining unit determining whether the elapsed time after starting the braking of the front wheel brake mechanism is within the reference time on the basis of the set reference time.

The vehicle speed monitoring value is a value associated with a vehicle speed of the motorcycle, and examples of the vehicle speed monitoring value is the vehicle speed.

The reference time is associated with the vehicle speed monitoring value at the time of starting the braking, and the reference time is shortened as the vehicle speed monitoring value is increased. Accordingly, it is possible to perform the control operation suitable to the state of the motorcycle by setting the reference time on the basis of the vehicle speed monitoring value.

It is preferable that the brake control device for the motorcycle further comprising:

a road surface frictional coefficient determining unit that determines whether a road surface frictional coefficient satisfies a given low frictional coefficient condition,
wherein the brake force control unit controls the brake force of the front wheel brake mechanism on the basis of a given high incremental gradient when it is determined that the road surface frictional coefficient satisfies the given low frictional coefficient condition.

The given high incremental gradient generally has a value greater than the set incremental gradient, and, for example, is the maximum incremental gradient which can be controlled by the brake force control unit.

When the road surface frictional coefficient is low, that is, when the road surface frictional coefficient satisfies the low frictional coefficient condition, the rear wheel lift-up rarely occurs. Accordingly, when the road surface frictional coefficient is low, the brake force of the front wheel brake mechanism is increased on the basis of the given high incremental gradient. As a result, the braking operation can be performed more effectively.

It is preferable that the brake control device for the motorcycle further comprising a brake force generation order determining unit that determines an order which of the brake forces of the front and rear wheel brake mechanisms are generated prior to the other brake force,
wherein the brake force control unit performs a rear wheel lift-up preventing control operation when it is determined that the road surface frictional coefficient does not satisfy the given low frictional coefficient condition, and
wherein, during executing the rear wheel lift-uppreventing control operation, the target control setting unit set the target control value such that the target control value, which is for the case where it is determined that generation of the brake force in the front wheel brake mechanism is later than the generation of the brake force of the rear wheel brake mechanism, is larger than the target control value, which is for the case where it is determined that the generation of the brake force in the front wheel brake mechanism is prior to the generation of the brake force of the rear wheel brake mechanism.

When the brake force of the front wheel brake mechanism is generated at the same time with or later than the generation of the brake force of the rear wheel brake, a gravity point of the motorcycle moves to a lower portion by the brake force of the rear wheel brake mechanism and the rear wheel lift-up rarely occurs. Accordingly, the limit deceleration monitoring value for the case where the generation of the brake force of the front wheel brake mechanism is at the same time with or later than the generation of the brake force of the rear wheel brake becomes greater than that for the case where the generation of the brake force of the front wheel brake mechanism is prior to the generation of the brake force of the rear wheel brake mechanism.
Therefore, the target control value for the case where the brake force of the front wheel brake mechanism is generated later than the brake force of the rear wheel brake mechanism is set to a value greater than that for the case where the brake force of the front wheel brake mechanism is generated earlier than the brake force of the rear wheel brake mechanism. Accordingly, it is possible to perform a control operation in a manner that different limit deceleration monitoring values are set in accordance with the states of the motorcycle. As a result, it is possible to prevent the rear wheel lift-up while preventing the brake force of the front wheel brake mechanism from decreasing.

It is preferable that the brake control device for the motorcycle further comprising:

a brake force magnitude determining unit that determines a relation in magnitude between the brake force of the front wheel brake mechanism and the brake force of the rear wheel brake mechanism,
wherein the brake force control unit performs a rear wheel lift-up preventing control operation when it is determined that the road surface frictional coefficient does not satisfy the given low frictional coefficient condition, and
wherein, during the rear wheel lift-up preventing control, the target control value setting unit set the target control value such that the target control value, which is for the case where it is determined that the magnitude of the brake force of the front wheel brake mechanism is smaller than that of the brake force of the rear wheel brake mechanism, is larger than the target control value, which is for the case where it is determined that the magnitude of the brake force of the front wheel brake mechanism is greater than that of the brake force of the rear wheel brake mechanism.

When the brake force of the front wheel brake mechanism is equal to or smaller than the brake force of the rear wheel brake mechanism in magnitude, the gravity point of the motorcycle moves to the lower portion by the brake force of the rear wheel brake mechanism and the rear wheel lift-up rarely occurs. Accordingly, the limit deceleration monitoring value for the case where the brake force of the front wheel brake mechanism is equal to or smaller than the brake force of the rear wheel brake mechanism in magunitude becomes greater than that for the case where the brake force of the front wheel brake mechanism is greater than the brake force of the rear wheel brake mechanism in magnitude.
Therefore, the target control value for the case where the brake force of the front wheel brake mechanism is smaller than the brake force of the rear wheel brake mechanism is set to a value greater than that for the case where the brake force of the front wheel brake mechanism is greater than the brake force of the rear wheel brake mechanism. Accordingly, it is possible to perform a control operation in a manner that different limit deceleration monitoring values are set in accordance with the states of the motorcycle. As a result, it is possible to prevent the rear wheel lift-up while preventing the brake force of the front wheel brake mechanism from decreasing.

According to the brake control device for the motorcycle of the invention, it is possible to prevent a rear wheel lift-up more assuredly and realize a higher braking performance.

## BRIEF DESCRIPTION OF THE DRAWINGS

Fig. 1 is a configuration diagram of a motorcycle having a brake control device for the motorcycle associated with embodiments of the invention;
Fig. 2 is a circuit diagram of a brake hydraulic pressure unit of the brake control device for the motorcycle;
Fig. 3 is a block diagram illustrating the brake control device for the motorcycle associated with the embodiment of the invention;
Figs. 4A and 4B are graphs for explaining a relation between a difference between a target control value and a deceleration monitoring value and an incremental gradient, in which Fig. 4A is a graph for explaining a case where the deceleration monitoring value is a front wheel cylinder pressure, and Fig. 4B is a graph for explaining a case where the deceleration monitoring value is a front wheel deceleration;
Fig. 5 is graphs for explaining one example of the relations between the deceleration monitoring value and the target control value;
Fig. 6 is a block diagram for explaining target control value setting unit and elapsed time determining unit in Fig. 3;
Fig. 7 is a graph for explaining a variation in an incremental gradient resulting from the target control value correction;

Fig. 8 is a flow chart for explaining a method of controlling a brake force of the front wheel brake FB using the brake control device for the motorcycle associated with the embodiment of the invention; and

Fig. 9 is a flow chart showing sub-routines of step S6 in Fig. 8.

DETAILED DESCRIPTION OF EXEMPLARY EMBODIMENTS OF THE INVENTION EMBODIMENTS

Hereinafter, embodiments of the invention will be described in detail with reference to drawings. Similar components are designated by identical reference numerals throughout the drawings, and detailed descriptions thereof will be omitted. In drawings, Fig. 1 is a configuration diagram of a motorcycle having a brake control device for the motorcycle associated with the embodiment of the invention, and Fig. 2 is a circuit diagram of a brake hydraulic pressure unit of the brake control device for the motorcycle.

As shown in Fig. 1, a brake control device for the motorcycle 100 is to properly control a brake force (brake hydraulic pressure) applied to a front wheel FT and a rear wheel RT (hereinafter, also may be referred to as a wheel FT and a wheel RT) of a vehicle BK. The control device mainly includes a hydraulic pressure unit 10 provided with oil passages (flow passages for a brake fluid) and various components, and a control device 20 properly controlling the various components in the hydraulic pressure unit 10.

The control device 20 in the brake control device for the motorcycle 100 is connected to: (1) a first pressure sensor 51 and a second pressure sensor 52 (hereinafter, also may be referred to as a pressure sensor 51 and a pressure sensor 52) detecting brake hydraulic pressures (first master cylinder pressure and second master cylinder pressure) generated in a first master cylinder M1 and a second master cylinder M2; and (2) a front wheel speed sensor 53 and a rear wheel speed sensor 54 (hereinafter, also may be referred to as wheel speed sensors 53 and 54) detecting wheel speeds (front wheel speed and rear wheel speed) of the front wheel FT and the rear wheel RT. The control device 20 includes, for example, a CPU, a RAM, a ROM and an input/output circuit to perform calculation processes on the basis of inputs from the pressure sensors 51 and 52 and the wheel speed sensors 53 and 54 and data and programs stored in the ROM so that control operations are performed.

A first front wheel cylinder FH1 is a hydraulic device converting the brake hydraulic pressure generated in the first master cylinder M1 and the brake control device for the motorcycle 100 to an operation force for a front wheel brake (a front wheel brake mechanism) FB provided in the front wheel FT. A second front wheel cylinder FH2 is a hydraulic device converting the brake hydraulic pressure generated by the second master cylinder M2 and the brake control device for the motorcycle 100 to the operation force for the front wheel brake FB provided in the front wheel FT. A rear wheel cylinder RH is a hydraulic device converting the brake hydraulic pressure generated by the second master cylinder M2 and the brake control device for the motorcycle 100 to the operation force for a rear wheel brake (a rear wheel brake mechanism) RB provided in the rear wheel RT. The front wheel cylinder FH1, the second front wheel cylinder FH2 and the rear wheel cylinder RH are connected to the hydraulic pressure unit 10 of the brake control device for the motorcycle 100 via respective pipe lines.

(Hydraulic pressure unit 10)

As shown in Fig. 2, the hydraulic pressure unit 10 of the brake control device for the motorcycle 100 is disposed between the first master cylinder M1 and the second master cylinder M2 generating the brake hydraulic pressure in response to a force applied to a first brake operation element L1 and a second brake operation element L2 by a driver. The hydraulic pressure unit 10 includes the front wheel brake FB and the rear wheel brake RB, and is configured to include a pump body 10a which is a base body having oil passages in which the brake fluid flows and a plurality of inlet valves 11 and outlet valves 12 disposed in the fluid passages.

The first master cylinder M1 is connected to an output hydraulic passage A1 formed in the pump body 10a, and a wheel hydraulic passage B1 formed in the pump body 10a is connected to the first front wheel cylinder FH1. The second master cylinder M2 is connected to an output hydraulic passage A2 formed in the pump body 10a, and a wheel hydraulic passage B2 formed in the pump body 10a is connected to the second front wheel cylinder FH2 and the rear wheel cylinder RH.

The oil passage connected to the first master cylinder M1 generally extends from the first master cylinder M1 to the first front wheel cylinder FH1 so that the operation force applied to the first brake operation element L1 is transmitted to the front wheel brake FB. Then oil passage connected to the second master cylinder M2 generally extends from the second master cylinder M2 to the second front wheel cylinder FH2 and the rear wheel cylinder RH, and the operation force applied to the second brake operation element L2 is transmitted to the first wheel brake FB and the rear wheel brake RB.

An inlet valve 11, an outlet valve 12, and a check valve 11a corresponding to the front wheel brake FB are provided in the oil passage connecting the first cylinder M1 to the first front wheel cylinder FH1. Two inlet valves 11, two outlet valves 12, and two check valves 11a corresponding to the front wheel brake FB and the rear wheel brake RB are provided in the oil passage connecting the second master cylinder M2, the second front wheel cylinder FH2 and the rear wheel cylinder RH.

Two reservoirs 13, two pumps 14, two suction valves 15, two discharge valves 16, two dampers 17 and two orifices 17a corresponding to the first master cylinder M1 and the second master cylinder M2 are provided in the pump body 10a. The hydraulic pressure unit 10 includes an electric motor 18 to drive two pumps 14.

The inlet valves 11 are normally open electromagnetic valves. Each of the inlet valves is disposed between the first master cylinder M1 and the first front wheel cylinder FH1 (between the output hydraulic passage A1 and the wheel hydraulic passage B1), between the second master cylinder M2 and the second front wheel cylinder FH2 (between the output hydraulic passage A2 and the wheel hydraulic passage B2), and between the second master cylinder M2 and the rear wheel cylinder RH (between the output hydraulic passage A2 and the wheel hydraulic passage B2), respectively. Since the inlet valves 11 are normally opened, the brake hydraulic pressure is permitted to be trasmitted from the first master cylinder M1 to the first front wheel cylinder FH1, and from the second master cylinder M2 to the second front wheel cylinder FH2 and the rear wheel cylinder RH. When the front wheel FT and the rear wheel RT are almost locked, the inlet valves 11 are closed by the control device 20 so that the brake hydraulic pressure applied from the first brake operation element L1 to the front wheel brake FB and from the second brake operation element L2 to the front wheel brake FB and the rear wheel brake RB is isolated.

The outlet valves 12 are normally open electromagnetic valves. Each of the outlet valves 12 is disposed between the first front wheel cylinder FH1 and the reservoir 13 (in an release passage C1), between the second front wheel cylinder FH2 and the reservoir 13 (in an release passage C2), and between the rear wheel cylinder RH and the reservoir 13 (in the release passage C2). Normally, the outlet valves 12 are closed. However, when the front wheel FT and the rear wheel RT are almost locked, the outlet valves 12 are opened by the control device 20 so that the brake fluid applied to the front wheel brake FB and the rear wheel brake RB flows into the reservoirs 13 and the hydraulic pressured applied thereto is released.

The check valves 11a connected in parallel to the inlet valve 11 permit a brake fluid to flow in a direction from the first front wheel cylinder FH1 to the first master cylinder M1, from the second front wheel cylinder FH2 to the second master cylinder M2, and from the rear wheel cylinder RH to the second master cylinder M2 only. Even when there is no input from the first brake operation element L1 and the second brake operation element L2 and the inlet valves 11 are closed, the check valves 11a permit the brake fluid to flow in a direction from the respective wheel cylinders FH1, FH2 and RH to the master cylinder M1 and M2.

The reservoirs 13 have a function to absorb the brake fluid flowing by releasing the outlet valves 12.

The pump 14 includes the suction valve 15 and the discharge valve 16, and has a function to suck out the brake fluid absorbed by the reservoir 13 and return the brake fluid to the master cylinders M1 and M2. The pump 14, the suction valve 15 and the discharge valve 16 are shown as separate parts in Fig. 2. However, in this embodiment, the suction valve 15 and the discharge valve 16 are integrally assembled in the pump 14.

The suction valve 15 is provided between the reservoir 13 and an upstream side of the pump 14, and is configured to permit the brake fluid to flow in a direction from the reservoir 13 to the upstream side of the pump 14.

The discharge valve 16 is provided between a downstream side of the pump 14 and the master cylinders M1 and M2, and is configured to permit a brake fluid to flow in a direction from the downstream side of the pump 14 to the master cylinders M1 and M2. Pulsation of the brake fluid discharged to the master cylinders M1 and M2 via the discharge valve 16 is absorbed by the damper 17 and the orifice 17a.

A delay valve 19 is provided between the second front wheel cylinder FH2 and the inlet valve 11 corresponding to the second front wheel cylinder FH2. According to its mechanical configuration, the delay valve 19 has a function to transmit the pressure applied to the brake fluid by operating the second brake operation element L2 to the rear wheel cylinder RH and the second front wheel cylinder FH2, and the pressure transmitted to the second front wheel cylinder FH2 is smaller than the pressure transmitted to the rear wheel cylinder RH. By operating the delay valve 19, a time to start an application of the brake hydraulic pressure to the second front wheel cylinder FH2 may come a little later than a time to start an application of the brake hydraulic pressure to the rear wheel cylinder RH.

(Control Device 20)

Next, the control device 20 will be described. Fig. 3 is a block diagram illustrating the brake control device for the motorcycle associated with the embodiment of the invention.

As shown in Fig. 3, the control device 20 includes a deceleration monitoring value obtaining unit 21, a vehicle speed monitoring value obtaining unit 22, a target control value setting unit 23, a brake force incremental gradient setting unit 24, a brake force control unit 25, a road surface frictional coefficient determining unit 26, an elapsed time determining unit 27, a brake force generation order determining unit 28, a brake force magnitude determining unit 29, and an ABS determining unit 30 as functional units.

(Deceleration Monitoring Value Obtaining Unit 21)

The deceleration monitoring value obtaining unit 21 obtains a deceleration monitoring value associated with deceleration of the vehicle BK. When the vehicle BK is decelerating, the deceleration and the deceleration monitoring value have positive values, and when the vehicle BK is accelerating, the deceleration and the deceleration monitoring value have negative values. When the deceleration and the deceleration monitoring value become greater, the vehicle BK is strongly decelerated. It is particularly preferable that the deceleration monitoring value is associated with the deceleration of the front wheel FT, and examples of the deceleration monitoring value is front wheel deceleration which is wheel deceleration of the front wheel FT and a front wheel cylinder pressure which is the brake force of the front wheel brake FB. When the deceleration monitoring value is the front wheel deceleration, the deceleration monitoring value obtaining unit 21 obtains the front wheel deceleration by temporally differentiating the front wheel speed detected by the front wheel speed sensor 53. When the deceleration monitoring value is the front wheel cylinder pressure, the deceleration monitoring value obtaining unit 21 obtains the front wheel cylinder pressure by a calculating operation on the basis of the master cylinder pressure detected by the first pressure sensor 51 and the second pressure sensor 52 and driving amount of the inlet valves 11 and the outlet valves 12 controlled by the brake force control unit 25 to be described later. Hereinafter, the case where the deceleration monitoring value is the front wheel cylinder pressure will be mainly described. The obtaind deceleration monitoring value is output to the brake force incremental gradient setting unit 24, the brake force control unit 25 and the road surface frictional coefficient determining unit 26.

(Vehicle Speed Monitoring Value Obtaining Unit 22)

The vehicle speed monitoring value obtaining unit 22 obtains the vehicle speed monitoring value associated with the vehicle speed of the vehicle BK. An example of the vehicle speed monitoring value is a vehicle speed which is a vehicle ground speed of the vehicle BK. when the vehicle speed monitoring value is the vehicle speed, the vehicle speed monitoring value obtaining unit 22 obtains the vehicle speed on the basis of the wheel speeds detected by the front wheel speed sensor 53 and the rear wheel speed sensor 54. As a calculation method for obtaining the vehicle speed, common methods can be used. For an example, when the front wheel speed detected by the front wheel speed sensor 53 is designated by $V_F$, and the rear wheel speed detected by the rear wheel speed sensor 54 is designated by $V_R$, the vehicle speed $V_{BK}$, can be obtaind by the following formula.

$$V_{BK} = (V_F+V_R)/2 \ldots \text{formula (1)}$$

The obtaind vehicle speed monitoring value is output to the elapsed time determining unit 27 and the ABS determining unit 30.

(Target Control Value Setting Unit 23)

The target control value setting unit 23 repeatedly sets a target control value which is a target value of the deceleration monitoring value for the case where the brake force control unit 25 controls the front wheel brake FB. The target control value is a value associated with the smallest value (the limit deceleration monitoring value) of the deceleration monitoring values with which the rear wheel lift-up is caused at the time of braking. For an example, the target value is a value smaller than the limit deceleration monitoring value by a predetermined value. In this manner, as the target control value is set to a value smaller than the limit deceleration monitoring value by the predetermined value, the front wheel cylinder pressure does not exceed the limit front wheel cylinder pressure which is one example of the limit deceleration monitoring value at the time of pressure increasing control operation to the front wheel brake FB, thereby properly preventing the rear wheel lift-up.

The limit deceleration monitoring value varies by a performance of the vehicle BK, a road surface frictional coefficient, an order in which of the brake forces of the front and rear wheel brake FB and RB are generated prior to the other, and a relation in magnitude between the brake force of the wheel brake FB and the brake force of the wheel brake RB. The limit deceleration monitoring values are obtained in advance by performing experiments under various conditions, and the target control value under the conditions is determined on the basis of the limit deceleration monitoring value. The target control value setting unit 23 stores the conditions and the target control value under the conditions so that they are associated therewith.

The target control value setting unit 23 can set the target values for controlling the driving amounts of the inlet valves 11, the outlet valves 12, and the electric motor 18 in an ABS control operation.

(Brake force Incremental Gradient Setting Unit 24)

The brake force incremental gradient setting unit 24 sets the brake force incremental gradient of the front wheel brake FB on the basis of a relation between the deceleration monitoring value and the target control value. Specifically, the brake force incremental gradient setting unit 24 repeatedly sets the brake force incremental gradient of the front wheel brake FB for the case of a small difference between the target control value and the deceleration monitoring value to be smaller than the brake force incremental gradient of the front wheel brake FB for the case of a large difference between the target control value and the deceleration monitoring value. The brake force incremental gradient setting unit 24 sets a desired incremental gradient by setting an amount of open signals of pulse signals to be described later and a time interval.

Figs. 4 are graphs for explaining a relation between a difference between the target control value and the deceleration monitoring value and the incremental gradient. Fig. 4A is a graph for explaining the case where the deceleration monitoring value is the front wheel cylinder pressure, and Fig. 4B is a graph for explaining the case where the deceleration monitoring value is the front wheel deceleration.

In Fig. 4A, a vertical axis indicates an incremental gradient R and a horizontal axis indicates a difference ($\Delta P = P_C - P_{FH}$) between a target control value $P_C$ and a front wheel cylinder pressure $P_{FH}$.

In Fig. 4B, a vertical axis indicates the incremental gradient R and a horizontal axis indicates a difference ($\Delta a = a_C - a_{FH}$) between a target control value $a_C$ and a front wheel deceleration $a_{FH}$.

In the brake force incremental gradient setting unit 24, a relation in which the incremental gradients R for the case of the small difference between the target control values ($P_C$, $a_C$) and the deceleration monitoring values ($P_{FH}$, $a_{FH}$) becomes smaller than the incremental gradients R for the case of the large difference between the target control values ($P_C$, $a_C$) and the deceleration monitoring values ($P_{FH}$, $a_{FH}$) is stored in advance, as shown in Figs 4A and 4B.

In Figs. 4A and 4B, the incremental gradients R which is linearly changed depending on the differences between the target control values ($P_C$, $a_C$) and the deceleration monitoring values ($P_{FH}$, $a_{FH}$) . However, the line indicating the incremental gradients R may be a curved line.

(Brake force Control Unit 25)

The brake force control unit 25 controls the brake forces of the front wheel brake FB and the rear wheel brake RB by controlling the driving amounts of the inlet valves 11, the outlet valves 12, and the electric motor 18. The brake force control unit 25 controls the brake force of the front wheel brake FB so as to approach the deceleration monitoring value to the target control value, and controls (pressure increasing control) the brake force of the front wheel brake FB on the basis of the incremental gradient set by the brake force incremental gradient setting unit 24.

Because the difference between the target control value and the deceleration monitoring value is large at the time of beggining of braking the front wheel, the brake force control unit 25 controls the brake force of the front wheel brake FB on the basis of large incremental gradient.

As the braking operation progressing, the difference between the target control value and the deceleration monitoring value is reduced. Thus, the brake force control unit 25 controls the brake force of the front wheel brake FB on the basis of the incremental gradient which is set to be sequentially reduced. Accordingly, when the deceleration monitoring value is increased and approaches the limit deceleration monitoring value, the brake force control unit 25 controls the brake force of the front wheel brake FB on the basis of small incremental gradient. Therefore, the deceleration monitoring value can be prevented not to exceed the limit deceleration monitoring value even when the brake force fluctuates. Therefore, it is possible to set the target control value to a value closer to the limit deceleration monitoring value. As a result, it is possible to prevent the rear wheel lift-up while preventing the brake force of the front wheel brake FB from decreasing.

The brake force control unit 25 controls the brake force of the front wheel brake FB to the holding state in the event that the difference between the target control value and the deceleration monitoring value is lower than a given value (that is, there is little difference between the target control value and the deceleration monitoring value considering errors, disbalance, and fluctuations).

The given value is determined in advance depending on the relation between the difference between the target control value and the deceleration monitoring value, and the incremental gradient and the performance of the inlet valve 11, and has a value slightly smaller than the target control value.

The holding state can be realized by controlling the inlet valves 11 and the outlet valves 12 of the front wheel cylinders FH1 and FH2, which apply the brake force to the front wheel brake FB, to be in a closed state.

The brake force control unit 25 controls again the brake force of the front wheel brake FB on the basis of the incremental gradient when the difference between the target control value and the deceleration monitoring value becomes greater than the given value.

Accordingly, since the brake force of the front wheel brake FB is controlled to be in the holding state when the deceleration monitoring value approaches a value almost the same as the target control value, it is possible to remove the fluctuation of the brake force and maintain the brake force to a value sufficiently equal to the limit deceleration monitoring value.

Figs. 5A to 5D are graphs for explaining one example of the relations between the deceleration monitoring value and the target control value. Fig. 5A is a graph for explaining the pulse signals driving the front wheel brake FB, Fig. 5B is a graph for explaining a relation between a front wheel cylinder pressure (a front wheel W/C pressure) and a target wheel cylinder pressure (a target W/C pressure) to a front wheel master cylinder pressure (a M/C pressure), Fig. 5C is a graph for explaining a relation between the front wheel deceleration and the limit deceleration, and Fig. 5D is a graph for illustrating the rear wheel speed and the front wheel speed.

As shown in Fig. 5, when braking operation is beginning at the time of $t_1$, since the difference between the target control value (the target W/C pressure in Fig. 5B and the target deceleration in Fig. 5C) and the deceleration monitoring value (the front wheel W/C pressure in Fig. 5B and the front wheel deceleration in Fig. 5C) is large, the brake force control unit 25 increases the brake force of the front wheel brake FB on the basis of large incremental gradient

(time $t_1$, to $t_2$). In other words, the amount of the open signals of the pulse signals controlling the opening and closing of the inlet valve 11 corresponding to the front wheel brake FB is large.

Further, as time elapsing, since the deceleration monitoring value approaches the target control value, the brake force control unit 25 increases the brake force of the front wheel brake FB on the basis of the incremental gradient to be sequentially reduced (time $t_2$ to $t_3$ and time $t_3$ to $t_4$). In other words, the amount of the open signal of the pulse signal becomes small.

When the difference between the target control value and the deceleration monitoring value is equal to or lower than the given value, the brake force control unit 25 controls the brake force of the front wheel brake FB to be in the holding state (from time $t_4$).

After that, when the difference between the target control value and the deceleration monitoring value is higher than the given value, the brake force control unit 25 increases again the brake force of the front wheel brake FB on the basis of the incremental gradient.

(Road Surface Frictional coefficient Determining Unit 26)

The road surface frictional coefficient determining unit 26 determines whether the road surface at the time of driving the vehicle BK satisfies a given low frictional coefficient condition. The road surface frictional coefficient determining unit 26 estimates the frictional coefficient (the road surface frictional coefficient) between the travelling road surface and the wheels FT and RT on the basis of a fact that the frictional coefficient is increased as a time variation rate of the deceleration monitoring value is increased. Also, the road surface frictional coefficient determining unit 26 estimates the road surface frictional coefficient on the basis of the stored relation between the time variation rate of the deceleration monitoring value and the road surface frictional coefficient by using graphs and tables. When the estimated road surface frictional coefficient is equal to or lower than a given value, the road surface frictional coefficient determining unit 26 determines that the road surface at the time of driving satisfies the given low frictional coefficient. When the estimated road surface frictional coefficient is greater than the given value, the road surface frictional coefficient determining unit 26 determines that the road surface at the time of driving does not satisfy the given low frictional coefficient. The determination result is output to the driving force control unit 25. Note that other common methods can be used as a method of estimating the road surface frictional coefficient.

When it is determined, on the basis of a given high incremental gradient, that the road surface at the time of driving satisfies the given low frictional coefficient, the brake force control unit 25 controls the brake force of the front wheel brake FB on the basis of the determination result provided by the road surface frictional coefficient determining unit 26. In this embodiment, the given high incremental gradient is equivalent to $R_{MAX}$ in Figs 4A and 4B. The given high incremental gradient is the maximum incremental gradient and is realized by controlling the inlet valves of the front wheel cylinders FH1 and FH2 applying the brake force to the front wheel brake FB to be in a continuously opened state and the outlet valve 12 of the front wheel cylinders FH1 and FH2 to be in a continuously closed state.

The rear wheel lift-up rarely occurs when the road surface frictional coefficient is low. Accordingly, when the road surface frictional coefficient is low, the brake force control unit 25 increases the brake force of the front wheel brake FB on the basis of the maximum incremental gradient. As a result, braking operation can be performed more efficiently.

(Elapsed Time Determining Unit 27)

The elapsed time determining unit 27 measures the elapsed time after starting the braking of the vehicle BK and determines whether the elapsed time after starting the braking is within the reference time to be described later. The determination result is output to the target control value setting unit 23.

The elapsed time determining unit 27 senses the starting of the vehicle BK braking, specifically, the starting of the wheel brakes FB and RB in the same manner as that of the brake force generation order determining unit 28 to be described later and measures the elapsed time after the sensed starting the braking.

The reference time is a time required for stabilizing a variation in load shift between the front and rear wheels of the vehicle BK, in other words, for stabilizing a variation in load in the front wheel. When the front wheel suspension mechanism of the vehicle BK is a front fork type, the reference time is a time elapsed from the time of starting the deceleration of the vehicle BK to the time of reducing and ending the suspension of the front fork.

The target control value setting unit 23 sets the target control value for the case where it is determined that the elapsed time is within the reference time to a value smaller than that for the case where it is determined that the elapsed time exceeds the reference time on the basis of the determination result provided by the elapsed time determining unit 27. Since the load of the vehicle BK is in an unstable state when the elapsed time is within the reference time, the limit deceleration monitoring value for the case where the elapsed time is within the reference time becomes smaller than that for the case where the elapsed time exceeds the reference time. Therefore, the target control value for the case where the elapsed time is within the reference time is set to a value smaller than that for the case where the elapsed time exceeds the reference time. Accordingly, it is possible to perform a control operation in a manner that different limit deceleration monitoring values are set in accordance with the states of the vehicle BK. As a result, it is possible to prevent the rear wheel lift-up while preventing the brake force of the front wheel brake FB from decreasing.

(Brake force Generating Order Determining Unit 28)

The brake force generation order determining unit 28 determines a generating order between the brake force of the front wheel brake FB and the brake force of the rear wheel brake RB. The generating order is associated with an input order of operation inputs to the wheel brakes FB and RB and is determined on the basis of the value detected by the pressure sensors 51 and 52 in this embodiment. For example, when the operation input to the front wheel brake FB is performed prior to performing the operation input to the rear wheel brake RB, the value detected by the first pressure sensor 51 is increased from zero. When the operation input to the rear wheel brake RB is performed prior to performing the operation input to the front wheel brake FB, the value detected by the second pressure sensor 52 is increased from zero. The brake force generation order determining unit 28 determines that the generating order of brake forces of the wheel brakes FB and RB by determining which of the values detected by the pressure sensors 51 and 52 earlier becomes larger than zero. Since the hydraulic pressure unit 10 of the embodiment includes the delay valve 19, the brake force generation order determining unit 28 can determine that the brake force of the front wheel brake FB is generated later than the brake force of the rear wheel brake RB when the value detected by the second pressure sensor 52 is increased from zero. The determination result is output to the target control value setting unit 23.

The target control value setting unit 23 sets the target control value for the case where it is determined that the brake force of the front wheel brake FB is generated at the same time with or later than the brake force of the rear wheel brake RB to a value greater than that for the case where it is determined that the brake force of the front wheel brake FB is generated earlier than the brake force of the rear wheel brake RB on the basis of the determination result provided by the brake force generation order determining unit 28.

When the brake force of the front wheel brake FB is generated at the same time with or later than the brake force of the rear wheel brake RB, the gravity point of the vehicle BK moves to a lower portion by the brake force of the rear wheel brake RB and the rear wheel lift-up rarely occurs. Accordingly, the limit deceleration monitoring value for the case where the brake force of the front wheel brake FB is generated at the same time with or later than the brake force of the rear wheel brake RB becomes greater than that for the case where the brake force of the front wheel brake FB is generated earlier than the brake force of the rear wheel brake RB.

Therefore, the target control value for the case where the brake force of the front wheel brake FB is generated at the same time with or later than the brake force of the rear wheel brake RB is set to a value greater than that for the case where the brake force of the front wheel brake FB is generated earlier than the brake force of the rear wheel brake RB.

Accordingly, it is possible to perform a control operation in a manner that different limit deceleration monitoring values are set in accordance with the states of the vehicle BK. As a result, it is possible to prevent the rear wheel lift-up while preventing the brake force of the front wheel brake FB from decreasing.

(Brake force Magnitude Determining Unit 29)

The brake force magnitude determining unit 29 determines the relation in magnitude between the brake force of the front wheel brake FB and the brake force of the rear wheel brake RB. The magnitudes of the brake forces, that is, the magnitudes of the wheel cylinder pressures acting on the wheel brakes FB and RB are calculated on the basis of the detection results of the pressure sensors 51 and 52 and the driving amounts of the inlet valves 11 and the outlet valves 12 controlled by the brake force control unit 25. The brake force magnitude determining unit 29 may have a configuration in which the wheel cylinder pressure acting on the wheel brakes FB and RB is directly detected by providing separate pressure sensors in the wheel hydraulic passages B1 and B2 in the vicinity of the wheel brakes FB and RB. The determination result is output to the target control value setting unit 23.

The target control value setting unit 23 sets the target control value for the case where it is determined that the brake force of the font wheel brake FB is smaller than the brake force of the rear wheel brake RB to a value greater than that for the case where it is determined that the brake force of the font wheel brake FB is greater than the brake force of the rear wheel brake RB on the basis of the determination result provided by the brake force magnitude determining unit 29.

When the brake force of the front wheel brake FB is equal to or smaller than the brake force of the rear wheel brake RB, the gravity point of the vehicle BK moves to the lower portion by the brake force of the rear wheel brake RB and the rear wheel lift-up rarely occurs. Accordingly, the limit deceleration monitoring value for the case where the brake force of the front wheel brake FB is equal to or smaller than the brake force of the rear wheel brake RB becomes greater than that for the case where the brake force of the front wheel brake FB is greater than the brake force of the rear wheel brake RB.

Therefore, the target control value for the case where the brake force of the front wheel brake FB is equal to or smaller than the brake force of the rear wheel brake RB is set to a value greater than that for the case where the brake force of the front wheel brake FB is greater than the brake force of the rear wheel brake RB. Accordingly, it is possible to perform a control operation in a manner that different limit deceleration monitoring values are set in accordance with the states of the vehicle BK. As a result, it is possible to prevent the rear wheel lift-up while preventing the brake force of the front wheel brake FB from decreasing.

(ABS Determining Unit 30)

The ABS determining unit 30 determines a necessity for performing the ABS control operation to the wheel brakes FB and RB on the basis of the wheel speeds detected by the wheel speed sensors 53 and 54 and the vehicle speed monitoring value obtaind by the vehicle speed monitoring value obtaining unit 22. The determination result is output to the target control value setting unit 23 and the brake force control unit 25.

The target control value setting unit 23 sets a target control value (a target ABS control operation value) for performing the ABS control operation to the wheel brakes FB and RB when it is necessary to perform the ABS control operation to the wheel brake FB and RB.
The brake force control unit 25 performs the ABS control operation to the wheel brakes FB and RB on the basis of the set target ABS control operation value.
The target control value setting unit 23 sets the brake force incremental gradient of the front wheel brake FB when there is no need to perform the ABS control operation to the front wheel FB. The brake force control unit 25 controls the brake force of the front wheel brake FB on the basis of the set target ABS control operation value when there is no need to perform the ABS control operation to the front wheel FB.

Hereinafter, configurations of the target control value setting unit 23 and the elapsed time determining unit 27 associated with the embodiment will be described in detail. Fig. 6 is a block diagram for explaining the target control value setting unit and the elapsed time determining unit in Fig. 3.
As shown in Fig. 6, the target control value setting unit 23 includes a reference target control value setting unit 23a and a target control value correction unit 23b having an elapsed time corresponding correction section $23b_1$, a brake force generating order correction section $23b_2$, and a brake force magnitude correction section $23b_3$ as functional units. The elapsed time determining unit 27 includes a reference time setting unit 27a and an elapsed time determining unit 27b as functional units.

First, the configuration of the elapsed time determining unit 27 will be described in detail.
The reference time setting unit 27a sets a reference time corresponding to the vehicle speed $V_{BK}$ by using a relation between the stored vehicle speed $V_{BK}$ and the stored reference time on the basis of the vehicle speed $V_{BK}$. The reference time is associated with the vehicle speed monitoring value at the time of starting the braking, and the reference time is shortened as the vehicle speed monitoring value is increased. In the reference time setting unit 27a, the relation between the reference time and the vehicle speed monitoring value at the time of starting the braking of the vehicle BK is stored in advance.

The elapse time determining unit 27b determines whether the elapsed time is within the reference time on the basis of the reference time set by the reference time setting unit 27a.

Next, the configuration of the target control value setting unit 23 will be described in detail.
The reference target control value setting unit 23a sets a target control value A (hereinafter, referred to as a reference target control value A) in a reference state. The reference state is a state that there is no need to be corrected by the elapsed time corresponding correction section $23b_1$, the brake force generating order correction section $23b_2$ and the brake force magnitude correction section $23b_3$, that is, a state that the elapsed time exceeds the reference time, the operation input to the front wheel brake FB comes at the same time with or earlier than the operation input to the rear wheel brake RB and the brake force of the front wheel brake FB is equal to or greater than the brake force of the rear wheel brake RB.
The set reference target control value (A; A>0) is output to the target control value correction unit 23b.

The target control correction unit 23b corrects the target control value (the reference target control value A) on the basis of the determination results provided by the elapsed time determining unit 27, the brake force generation order determining unit 28 and the brake force magnitude determining unit 29, and includes the elapsed time corresponding correction section $23b_1$, the brake force generating order correction section $23b_2$, and the brake force magnitude correction section $23b_3$.

The elapsed time corresponding correction section $23b_1$ corrects the target control value (A) on the basis of the determination result provided by the elapsed time determining unit 27b. In the embodiment, the elapsed time corresponding correction section $23b_1$ corrects the target control value to be reduced by a predetermined value $\alpha 1 (0 < \alpha 1 < A)$ when the elapsed time is within the reference time. The obtaind target control value (A; or A - $\alpha$1) is output to the brake force generating order correction section $23b_Z$.

The brake force generating order correction section $23b_2$ corrects the target control value (A; or A - $\alpha$1) on the basis of the determination result provided by the brake force generation order determining unit 28. In the embodiment, the brake force generating order correction section $23b_2$ corrects the target control value (A; or A - $\alpha$1) to be greater by a predetermined value $\alpha$2 when the brake force of the front wheel brake FB is generated at the same time with or later than the brake force of the rear wheel brake RB. The obtained target control value (A; A - $\alpha$1; A + $\alpha$2; or A - $\alpha$1 + $\alpha$2) is output to the brake force magnitude correction section $23b_3$.
The brake force generating order correction section $23b_2$ may correct the target control value (A; or A - $\alpha$1) to be greater by the predetermined value $\alpha$2 when the brake force of the front wheel brake FB is generated later than the brake force of the rear wheel brake RB, and may not correct the target control value (A; or A - $\alpha$1) when the

brake force of the front wheel brake FB is generated at the same time with or earlier than the brake force of the rear wheel brake RB.

The brake force magnitude correction section $23b_3$ corrects the target control value (A; A - $\alpha$1; A + $\alpha$2; or A - $\alpha$1 + $\alpha$2) on the basis of the determination result provided by the brake force magnitude determining unit 29. In the embodiment, the brake force magnitude correction section $23b_3$ corrects the target control value (A; A - $\alpha$1; A + $\alpha$2; or A - $\alpha$1 + $\alpha$2) to be greater by a predetermined value $\alpha$3 when the brake force of the front wheel brake FB is equal to or smaller than the brake force of the rear wheel brake RB. The obtained target control value (A; A - $\alpha$1; A + $\alpha$2; A + $\alpha$3; A - $\alpha$1 + $\alpha$2; A - $\alpha$1 + $\alpha$3; A + $\alpha$2 + $\alpha$3; or A - $\alpha$1 + $\alpha$2 + $\alpha$3) is output to the brake force incremental gradient setting unit 24.

The brake force magnitude correction section $23b_3$ may correct the target control value (A; A - $\alpha$1; A + $\alpha$2; or A - $\alpha$1 + $\alpha$2) to be greater by the predetermined value $\alpha$3 when the brake force of the front wheel brake FB is less than the brake force of the rear wheel brake RB, and may not correct the target control value (A; A - $\alpha$1; A + $\alpha$2; or A - $\alpha$1 + $\alpha$2) when the brake force of the front wheel brake FB is equal to or greater than the brake force of the rear wheel brake RB.

The correction processes in the target control value correction unit 23b is one example, and the correction order can be properly changed (the correction order can be changed to any order or the correction processes can be performed simultaneously). The reference state of the target control value set by the reference target control value setting unit 23a can be properly changed also, and the target control value correction unit 23b corrects the target control value corresponding to the properly set reference target control value.

(Variation in Incremental Gradient resulting from Target Control Value Correction)

Next, the variation in the incremental gradient resulting from the target control value correction will be described. Fig. 7 is a graph for explaining the variation in the incremental gradient resulting from the target control value correction.

As shown in Fig. 7, $\Delta P_0$ is represented by the following formula when $\Delta P$ is set to $\Delta P_0$ and $P_{FH}$ is the deceleration monitoring value and $P_c$ is the reference target control value is $\Delta P_0$.

$$\Delta P_0 = P_c - P_{FH}$$

The incremental gradient at this time is designated by $R_0$.

$\Delta P_1$ is represented by the following formula when the deceleration monitoring value $P_{PH}$ maintains the same value and the reference target control value $P_c$ is corrected by the elapsed time corresponding correction section $23b_1$ only.

$$\Delta P_1 = P_c - P_{FH} - \alpha_1$$

Accordingly, the incremental gradient ($R_1$) at this time is smaller than $R_0$.

$\Delta P_Z$ is represented by the following formula when the deceleration monitoring value $P_{FH}$ maintains the same value and the reference target control value $P_c$ is corrected by the brake force generating order correction section $23b_2$ only.

$$\Delta P_2 = P_c - P_{FH} + \alpha_2$$

Accordingly, the incremental gradient ($R_2$) at this time is greater than $R_0$.

$\Delta P_3$ is represented by the following formula when the deceleration monitoring value $P_{FH}$ maintains the same value and the reference target control value $P_c$ is corrected by the brake force magnitude correction section $23b_3$ only.

$$\Delta P_3 = P_c - P_{FH} + \alpha_3$$

Accordingly, the incremental gradient ($R_3$) at this time is greater than $R_0$.

In an actual control operation, these corrections are combined to each other so that the incremental gradient corresponding to the respective conditions is obtaind and is provided to the control operation.

(Method of Controlling Brake force of Front Wheel Brake FB)

Next, a method of controlling the brake force of the front wheel brake FB using the brake control device for the motorcycle 100 associated with the embodiment will be described. Fig. 8 is a flow chart for explaining the method of controlling the brake force of the front wheel brake FB using the brake control device for the motorcycle 100 associated with the embodiment of the invention. Fig. 9 is sub-routines of step S6 in Fig. 8.

As shown in Fig. 8, when a driver performs the operation input to the front wheel brake FB and the brake force of the front wheel brake is generated, the control device 20 obtains various monitoring values at first. The determining unit 26, 27, 28 and 29 of the control device 20 perform determination operations (step S1).

Next, the ABS determining unit 30 determines whether there is a necessity for performing the ABS control operation to the brake force of the front wheel brake FB (step S2).

When it is determined that it is necessary to perform the ABS control operation to the brake force of the front wheel brake FB (Yes in step S2), the brake force control unit 25 of the control device 20 depressurizes the front wheel cylinder pressure by performing the ABS control operation.

When it is determined that there is no need to perform the ABS control operation to the brake force of the front wheel brake FB (No in step S2), the road surface frictional coefficient determining unit 26 of the control device 20 determines whether the road surface frictional coefficient satisfies the low frictional coefficient condition (step S4).

When it is determined that the road surface frictional coefficient satisfies the low frictional coefficient condition (Yes in step S4), the brake force control unit 25 of the control device 20 depressurizes the front wheel cylinder pressure on the basis of the maximum incremental gradient (step S5).

When it is determined that the road surface frictional coefficient does not satisfy the low frictional coefficient condition (No in step S4), the control device 20 performs the rear wheel lift-up preventing control operation to the front wheel brake FB (step S6).

The control device 20 repeatedly performs the control operation until there is no operation input to the front wheel brake FB (Yes in step S7).

Hereinafter, the rear wheel lift-up preventing control operation in step 6 will be described in detail.

As shown in Fig. 9, the target control value setting unit 23 of the control device 20 sets the reference target control value as the target control value (step S11).

When the elapsed time determining unit 27 determines that the elapsed time is within the reference time (Yes in step S12), the target control value setting unit 23 of the control device 20 corrects the target control value (step S13) and step S14 is performed.

When the elapsed time determining unit 27 determines that the elapsed time exceeds the reference time (No in step S12), the target control value setting unit 23 of the control device 20 does not correct the target control value and step S14 is performed.

Next, when the brake force generation order determining unit 28 determines that the brake force of the front wheel brake FB is generated at the same time with or later than the brake force of the rear wheel brake RB (Yes in step S14), the target control value setting unit 23 of the control device 20 corrects the target control value (step S15) and step S16 is performed.

When the brake force generation order determining unit 28 determines that the brake force of the front wheel brake FB is generated earlier than the brake force of the rear wheel brake RB (No in step S14), the target control value setting unit 23 of the control device 20 does not correct the target control value and step S16 is performed.

Next, when the brake force magnitude determining unit 29 determines that the brake force of the front wheel brake FB is equal to or smaller than the brake force of the rear wheel brake RB (Yes in step S16), the target control value setting unit 23 of the control device 20 corrects the target control value (step S17) and step S18 is performed.

When the brake force magnitude determining unit 29 determines that the brake force of the front wheel brake FB is greater than the brake force of the rear wheel brake RB (No in step S16), the target control value setting unit 23 of the control device 20 does not correct the target control value and an operation of step S18 is performed.

Next, the brake force incremental gradient setting unit 24 of the control device 20 calculates the difference between the target control value and the deceleration monitoring value (step S18), and the brake force incremental gradient of the front wheel brake FB is set on the basis of the difference (step S19).

When the difference is equal to or lower than the given value (Yes in Step 20), the brake force control unit 25 controls the front wheel cylinder pressure to be in the holding state (step S21).

When the difference is greater than the given value (No in Step 20), the brake force control unit 25 controls the front wheel cylinder pressure on the basis of the set incremental gradient (step S22).

According to the brake control device for the motorcycle 100 in accordance with the present embodiment, it is possible to prevent the rear wheel lift-up more assuredly and realize higher braking performance. The brake force incremental gradient of the front wheel brake FB is set in consideration of the road surface frictional coefficient, the elapsed time after starting the braking, the order in which the brake forces of the wheel brakes FB and RB are generated, and magnitudes of the brake forces of the wheel brakes FB and RB, and the pressure increasing control operation is performed to the front wheel brake FB on the basis of the incremental gradient. Accordingly, it is possible to prevent the rear wheel lift-up and realize a high braking performance in a balanced manner in accordance with respective conditions.

Although the embodiments of the invention have been described hereinabove, it should be understood that the invention is not limited to the above embodiments, but various modifications can be made without departing from the scope and spirit of the invention.

For example, the brake control device for the motorcycle may further include road surface frictional coefficient magnitude determining unit for determining whether the road surface frictional coefficient exceeds a reference value, and the target control value setting unit may set the target control value for the case where the road surface frictional coefficient is greater than the reference value to a value smaller than the target control value for the case where the road surface frictional coefficient is equal to or smaller than the reference value.

The rear wheel lift-up rarely occurs when the road surface frictional coefficient is low. In accordance with such a configuration, since the target control value is set to a small value when the road surface frictional coefficient is low, it is possible to set the incremental gradient to a small value.

The road surface frictional coefficient magnitude determining unit can estimate the road surface frictional coefficient in the same manner as that of the above-described road surface frictional coefficient determining unit 26.

## Claims

1. A brake control device (20) for a motorcycle (100) comprising:

    a front wheel brake mechanism (FB) mounted on a front wheel;
    a rear wheel brake mechanism (RB) mounted on a rear wheel; and
    a brake force control unit (25) that controls a brake force generated in the front and rear wheel brake mechanism,
    wherein the brake control device prevents a wheel from being locked at the time of braking,
    a deceleration monitoring value obtaining unit (21) that obtains a deceleration monitoring value associated with a deceleration of the motorcycle;
    a target control value setting unit (23) that sets a target control value associated with a limit deceleration monitoring value with which a rear wheel lift-up is caused at the time of braking; the brake control device is **characterized in that** the brake control device comprises:
    a brake force incremental gradient setting unit (24) that repeatedly sets a brake force incremental gradient of the front wheel brake mechanism so that the incremental gradient, in a case where a difference between the set target control value and the obtaind deceleration monitoring value is small, becomes smaller than the incremental gradient in a case where the difference is large,

    wherein the brake force control unit (25) controls the brake force of the front wheel brake mechanism on the basis of the set brake force incremental gradient.

2. The brake control device for the motorcycle according to Claim 1, wherein the brake force control unit (25) controls the brake force of the front wheel brake mechanism to a holding state when the obtaind deceleration monitoring value exceeds a given value and approaches the set target control value.

3. The brake control device for the motorcycle according to Claim 1 or 2, further comprising:

    an elapsed time determining unit (27) that determines whether an elapsed time after starting the braking of the motorcycle is within a reference time required for stabilizing a variation in load resulting from a load shift between the front and rear wheels,

    wherein the target control value setting unit (23) sets the target control value such that the target control value, which is for the case where it is determined that the elapsed time is within the reference time, is smaller than that, which is for the case where it is determined that the elapsed time exceeds the reference time.

4. The brake control device for the motorcycle according to Claim 3, further comprising a vehicle speed monitoring value obtaining unit (22) that obtains a vehicle speed monitoring value associated with a vehicle speed,
    wherein the elapsed time determining unit (27) comprises:

    a reference time setting unit (27a) setting the reference time on the basis of the vehicle speed monitoring value obtaind at the time of starting the braking of the front wheel brake mechanism, and
    an elapsed time determining unit (27b) determining whether the elapsed time after starting the braking of the front wheel brake mechanism is within the reference time on the basis of the set reference time.

5. The brake control device for the motorcycle according to any one of Claims 1 to 4, further comprising:

    a road surface frictional coefficient determining unit (26) that determines whether a road surface frictional coefficient satisfies a given low frictional coefficient condition,

    wherein the brake force control unit (25) controls the brake force of the front wheel brake mechanism on the basis of a given high incremental gradient when it is determined that the road surface frictional coefficient satisfies the given low frictional coefficient condition.

6. The brake control device for the motorcycle according to Claim 5, further comprising a brake force generation order determining unit (28) that determines an order which of the brake forces of the front and rear wheel brake mechanisms are generated prior to the other brake force,
    wherein the brake force control unit (26) performs a rear wheel lift-up preventing control operation when it is determined that the road surface frictional coefficient does not satisfy the given low frictional coefficient condition, and

wherein, during executing the rear wheel lift-up preventing control operation, the target control setting unit (23) sets the target control value such that a target control value, which is for the case where it is determined that the generation of the brake force in the front wheel brake mechanism is later than the generation of the brake force of the rear wheel brake mechanism, is larger than the target control value, which is for the case where it is determined that the generation of the brake force in the front wheel brake mechanism is prior to the generation of the brake force of the rear wheel brake mechanism

**7.** The brake control device for the motorcycle according to Claim 5 or 6, further comprising:

a brake force magnitude determining unit (29) that determines a relation in magnitude between the brake force of the front wheel brake mechanism and the brake force of the rear wheel brake mechanism,

wherein the brake force control unit (25) performs a rear wheel lift-up preventing control operation when it is determined that the road surface frictional coefficient does not satisfy the given low frictional coefficient condition, and
wherein, during the rear wheel lift-up preventing control, the target control value setting unit (23) sets the target control value such that a target control value, which is for the case where it is determined that the magnitude of the brake force of the front wheel brake mechanism is smaller than that of the brake force of the rear wheel brake mechanism, is larger than the target control value, which is for the case where it is determined that the magnitude of the brake force of the front wheel brake mechanism is greater than that of the brake force of the rear wheel brake mechanism.

**Patentansprüche**

**1.** Bremsensteuerungseinrichtung (20) für ein Motorrad (100), umfassend:

einen Vorderradbremsmechanismus (FB), der an einem Vorderrad angeordnet ist,
einen Hinterradbremsmechanismus (RB), der an einem Hinterrad angeordnet ist, und
eine Bremskraftsteuerungseinheit (25), die eine Bremskraft, die in dem Vorder- und Hinterradbremsmechanismus erzeugt wird, steuert,
wobei die Bremskraftsteuerungseinheit ein Rad daran hindert blockiert zu sein,
eine Verzögerungsüberwachungswerterfassungseinheit (21), die einen Verzögerungsüberwachungswert, der mit einer Verzögerung des Motorrads assoziiert wird, erfasst,
eine Zielsteuerungswerteinstelleinheit (23), die einen Zielsteuerungswert einstellt, der mit einem Grenzüberwachungswert bei dem ein Hinterradabheben zum Zeitpunkt des Bremsens erwirkt wird, assoziiert wird,
die Bremssteuerungseinrichtung ist **dadurch gekennzeichnet, dass** die Bremssteuerungseinrichtung, umfasst
eine Bremskraftinkrementalgradienteneinstelleinheit (24), die wiederholt einen Bremskraftinkremantalgradienten des Vorderradbremsmechanismus so einstellt, dass der Inkrementalgradient, in einem Fall in dem der Unterschied zwischen dem eingestellten Zielsteuerwert und dem erfassten Verzögerungsüberwachungswert klein wird, kleiner wird als der Inkrementalgradient in einem Fall, in dem der Unterschied groß ist,

wobei die Bremskraftsteuerungseinheit (25) die Bremskraft des Vorderradbremsmechanismus auf der Basis des eingestellten Bremskraftinkrementalgradienten steuert.

**2.** Bremsensteuerungseinrichtung für ein Motorrad nach Anspruch 1, bei der
die Bremskraftsteuerungseinheit (25) die Bremskraft des Vorderradbremsmechanismus bis hin zu einem Haltezustand, wenn der erfasste Verzögerungsüberwachungswert einen vorgegebenen Wert überschreitet und sich dem eingestellten Zielsteuerungswert nähert, steuert.

**3.** Bremsensteuerungseinrichtung für ein Motorrad nach Anspruch 1 oder 2, ferner umfassend
eine Erfassungseinheit der verstrichenen Zeit (27), die erfasst, ob eine verstrichene Zeit nach dem Beginn des Bremsens des Motorrades innerhalb einer Referenzzeit, die benötigt wird, um eine Schwankung in der Belastung, die sich aus einem Lastwechsel zwischen dem Vorder- und Hinterrad ergibt, zu stabilisieren, liegt,
wobei die Zielüberwachungswerteinstelleinheit (23) den Zielsteuerungswert so einstellt, dass der Zielsteuerungswert, der für den Fall ist, in dem erfasst wird, dass die verstrichene Zeit innerhalb der Referenzzeit liegt, kleiner ist als die, die für den Fall ist, in dem erfasst wird, dass die verstrichene Zeit die Referenzzeit überschreitet.

**4.** Bremsensteuerungseinrichtung für ein Motorrad nach Anspruch 3, ferner umfassend
eine Fahrzeuggeschwindigkeitsüberwachungswerterfassungseinheit (22), die einen Fahrzeuggeschwindigkeitsüberwachungswert erfasst, der mit einer Fahrzeuggeschwindigkeit assoziiert wird,
wobei die Erfassungseinheit der verstrichenen Zeit (27)
eine Referenzzeiteinstelleinheit (27a), die die Referenzzeit auf Basis des Fahrzeuggeschwindigkeitswertes, der zu dem Zeitpunkt des Beginns des Bremsens des Vorderradbremsmechanismus erfasst wird, einstellt, und
eine Erfassungseinheit der verstrichenen Zeit (27b), die erfasst, ob die verstrichene Zeit nach dem Beginn des Bremsens des Vorderradbremsmechanismus auf Basis der eingestellten Referenzzeit innerhalb der Referenzzeit ist, umfasst.

5. Bremsensteuerungseinrichtung für ein Motorrad nach einem der Ansprüche 1 bis 4, ferner umfassend eine Fahrbahnoberflächenreibungskoeffizienterfassungseinheit (26), die erfasst, ob ein Fahrbahnoberflächenreibungskoeffizient einem vorgegebenen niedrigen Reibungskoeffizientenzustand genügt,
wobei die Bremskraftsteuerungseinheit (25) die Bremskraft des Vorderradbremsmechanismus auf der Basis eines vorgegebenen Hoch-Inkrementalgradienten, wenn erfasst wird, dass der Fahrbahnoberflächenreibungskoeffizient dem vorgegebenen Niedrig-Reibungskoeffizientenzustand genügt, steuert.

6. Bremsensteuerungseinrichtung für ein Motorrad nach Anspruch 5, ferner umfassend
eine Bremskrafterzeugungsreihenfolgeerfassungseinheit (28), die eine Reihenfolge in welcher die Bremskräfte des Vorder- und Hinterradbremsmechanismus vor der anderen Bremskraft erzeugt werden, erfasst,
wobei die Bremskraftsteuerungseinheit (26) einen Hinterradanhebeverhinderungssteuerungsvorgang, wenn erfasst wird, dass der Fahrbahnoberflächenreibungskoeffizient nicht dem vorgegebenen Niedrig-Reibungskoeffizientenzustand genügt, durchführt, und
wobei, während dem Durchführen des Hinterradanhebeverhinderungssteuerungsvorganges, die Zielsteuerungseinstelleinheit (23) den Zielsteuerungswert so einstellt, dass ein Zielsteuerungswert, der für den Fall ist, in dem erfasst wird, dass die Erzeugung der Bremskraft in dem Vorderradbremsmechanismus später stattfindet als die Erzeugung der Bremskraft des Hinterradbremsmechanismus, größer ist als der Zielsteuerungswert, der für den Fall ist, in dem erfasst wird, dass die Erzeugung der Bremskraft in dem Vorderradbremsmechanismus früher stattfindet als die Erzeugung der Bremskraft des Hinterradbremsmechanismus.

7. Bremsensteuerungseinrichtung für ein Motorrad nach Anspruch 5 oder 6, ferner umfassend
eine Bremskraftstärkenerfassungseinheit (29), die eine Stärkenbeziehung zwischen der Bremskraft des Vorderradbremsmechanismus und der Bremskraft des Hinterradbremsmechanismus erfasst,
wobei die Bremskraftsteuerungseinheit (25) einen Hinterradanhebeverhinderungssteuerungsvorgang durchführt, wenn erfasst wird, dass der Fahrbahnoberflächenreibungskoeffizient dem vorgegebenen Niedrig-Reibungskoeffizientenzustand nicht genügt, und
wobei, während dem Hinterradanhebeverhinderungssteuerungsvorgang, die Zielsteuerungswerteinstelleinheit (23) den Zielsteuerungswert so einstellt, dass ein Zielsteuerungswert, der für den Fall ist, in dem erfasst wird, dass die Stärke der Bremskraft des Vorderradbremsmechanismus kleiner ist als die Bremskraft des Hinterradbremsmechanismus, größer ist als der Zielsteuerungswert, der für den Fall ist, in dem erfasst wird, dass die Stärke der Bremskraft des Vorderradbremsmechanismus größer ist als die Bremskraft des Hinterradbremsmechanismus.

## Revendications

1. Dispositif de commande de frein (20) pour une motocyclette (100) comprenant :

un mécanisme de frein de roue avant (FB) monté sur une roue avant ;
un mécanisme de frein de roue arrière (RB) monté sur une roue arrière ; et
une unité de commande de force de freinage (25) qui commande une force de freinage générée dans le mécanisme de frein de roue avant et arrière,
dans lequel le dispositif de commande de frein empêche une roue d'être verrouillée au moment du freinage,
une unité d'obtention de valeur de contrôle de décélération (21) qui obtient une valeur de contrôle de décélération associée à une décélération de la motocyclette ;
une unité de paramétrage de valeur de commande cible (23) qui paramètre une valeur de commande cible associée à une valeur de contrôle de décélération limite à laquelle un soulèvement de roue arrière est provoqué au moment du freinage ; le dispositif de commande de frein est **caractérisé en ce que** le dispositif de commande de frein comprend :
une unité de paramétrage de gradient incrémental de force de freinage (24) qui paramètre répétitivement un gradient incrémental de force de freinage du mécanisme de frein de roue avant de sorte que le gradient incrémental, dans un cas où une différence entre la valeur de commande cible paramétrée et la valeur de contrôle de décélération obtenue est petite, devient plus petit que le gradient incrémental dans un cas où la différence est grande,

dans lequel l'unité de commande de force de freinage (25) commande la force de freinage du mécanisme de frein de roue avant sur la base du gradient incrémental de force de freinage paramétré.

**2.** Dispositif de commande de frein pour la motocyclette selon la revendication 1, dans lequel l'unité de commande de force de freinage (25) commande la force de freinage du mécanisme de frein de roue avant jusqu'à un état de maintien lorsque la valeur de contrôle de décélération obtenue dépasse une valeur donnée et approche la valeur de commande cible paramétrée.

**3.** Dispositif de commande de frein pour la motocyclette selon la revendication 1 ou 2, comprenant en outre :

une unité de détermination de temps écoulé (27) qui détermine si un temps écoulé après le début du freinage de la motocyclette est à l'intérieur d'un temps de référence requis pour stabiliser une variation de charge résultant d'un décalage de charge entre les roues avant et arrière,

dans lequel l'unité de paramétrage de valeur de commande cible (23) paramètre la valeur de commande cible de sorte que la valeur de commande cible, qui sert pour le cas où il est déterminé que le temps écoulé est à l'intérieur du temps de référence, est plus petite que celle qui sert pour le cas où il est déterminé que le temps écoulé dépasse le temps de référence.

**4.** Dispositif de commande de frein pour la motocyclette selon la revendication 3, comprenant en outre une unité d'obtention de valeur de contrôle de vitesse de véhicule (22) qui obtient une valeur de contrôle de vitesse de véhicule associée à une vitesse de véhicule,
dans lequel l'unité de détermination de temps écoulé (27) comprend :

une unité de paramétrage de temps de référence (27a) paramétrant le temps de référence sur la base de la valeur de contrôle de vitesse de véhicule obtenue au moment du début du freinage du mécanisme de frein de roue avant, et
une unité de détermination de temps écoulé (27b) déterminant si le temps écoulé après le début du freinage du mécanisme de frein de roue avant est à l'intérieur du temps de référence sur la base du temps de référence paramétré.

**5.** Dispositif de commande de frein pour la motocyclette selon l'une quelconque des revendications 1 à 4, comprenant en outre :

une unité de détermination de coefficient de friction de surface de route (26) qui détermine si un coefficient de friction de surface de route satisfait à une condition donnée de faible coefficient de friction,

dans lequel l'unité de commande de force de freinage (25) commande la force de freinage du mécanisme de frein de roue avant sur la base d'un gradient incrémental élevé donné quand il est déterminé que le coefficient de friction de surface de route satisfait à la condition donnée de faible coefficient de friction.

**6.** Dispositif de commande de frein pour la motocyclette selon la revendication 5, comprenant en outre une unité de détermination d'ordre de production de force de freinage (28) qui détermine un ordre selon lequel les forces de freinage des mécanismes de frein de roue avant et arrière sont générées avant l'autre force de freinage,
dans lequel l'unité de commande de force de freinage (25) effectue une opération de commande de prévention de soulèvement de roue arrière quand il est déterminé que le coefficient de friction de surface de route ne satisfait pas à la condition donnée de faible coefficient de friction, et
dans lequel, pendant l'exécution de l'opération de commande de prévention de soulèvement de roue arrière, l'unité de paramétrage de commande cible (23) paramètre la valeur de commande cible de sorte qu'une valeur de commande cible, qui sert pour le cas où il est déterminé que la production de la force de freinage dans le mécanisme de freinage de roue avant est postérieure à la production de la force de freinage du mécanisme de frein de roue arrière, est plus grande que la valeur de commande cible, qui sert pour le cas où il est déterminé que la production de la force de freinage dans le mécanisme de freinage de roue avant est antérieure à la production de la force de freinage du mécanisme de frein de roue arrière.

**7.** Dispositif de commande de frein pour la motocyclette selon la revendication 5 ou 6, comprenant en outre :

une unité de détermination d'amplitude de force de freinage (29) qui détermine une relation d'amplitude entre la force de freinage du mécanisme de frein de roue avant et la force de freinage du mécanisme de frein de roue arrière,

dans lequel l'unité de commande de force de freinage (25) effectue une opération de commande de prévention de soulèvement de roue arrière quand il est déterminé que le coefficient de friction de surface de route ne satisfait pas à la condition donnée de faible coefficient de friction, et
dans lequel, pendant la commande de prévention de soulèvement de roue arrière, l'unité de paramétrage de valeur de commande cible (23) paramètre la valeur de commande cible de sorte qu'une valeur de commande cible, qui sert pour le cas où il est déterminé que l'amplitude de la force de freinage du mécanisme de frein de roue avant est plus petite que celle de la force de freinage du mécanisme de frein de roue arrière, est plus grande que la valeur de commande cible, qui sert pour le cas où il est déterminé que l'amplitude de la force de freinage du mécanisme de frein de roue avant est plus grande que celle de la force de freinage du mécanisme de frein de roue arrière.

FIG. 1

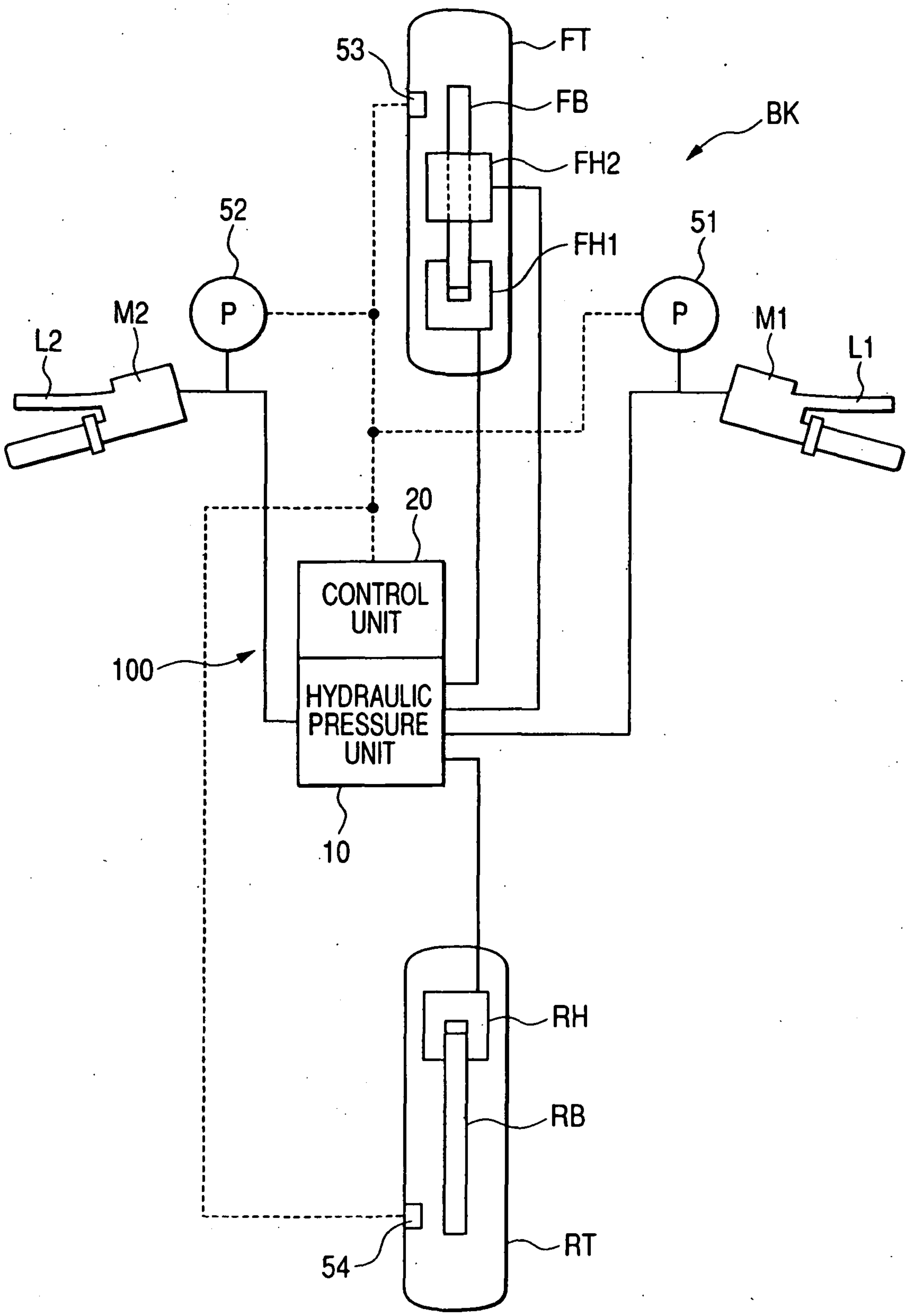
53
FT
FB
BK
FH2
52
FH1
51
P
P
M2
M1
L2
L1
20
CONTROL UNIT
HYDRAULIC PRESSURE UNIT
100
10
RH
RB
RT
54

FIG. 2

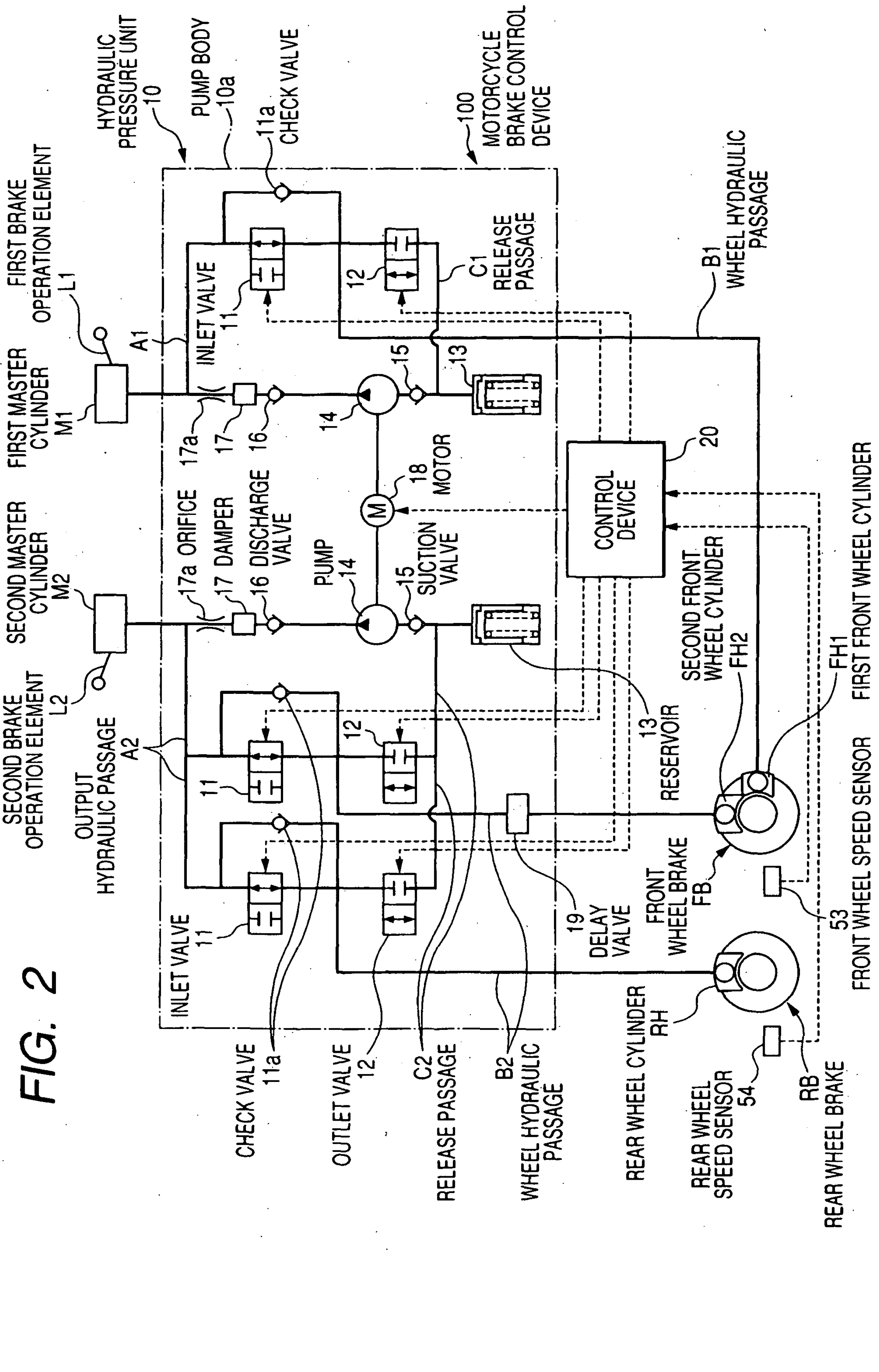
HYDRAULIC PRESSURE UNIT
10
PUMP BODY
10a
11a CHECK VALVE
100 MOTORCYCLE BRAKE CONTROL DEVICE
FIRST BRAKE OPERATION ELEMENT
L1
FIRST MASTER CYLINDER
M1
A1
INLET VALVE
11
12
C1 RELEASE PASSAGE
B1 WHEEL HYDRAULIC PASSAGE
15
13
17a
17
16
14
20
CONTROL DEVICE
18 MOTOR
SECOND MASTER CYLINDER
M2
17a ORIFICE
17 DAMPER
16 DISCHARGE VALVE
PUMP
14
15 SUCTION VALVE
SECOND BRAKE OPERATION ELEMENT
L2
OUTPUT HYDRAULIC PASSAGE
A2
11
12
13 RESERVOIR
SECOND FRONT WHEEL CYLINDER
FH2
FH1
FIRST FRONT WHEEL CYLINDER
INLET VALVE
11
19 DELAY VALVE
FRONT WHEEL BRAKE
FB
53
FRONT WHEEL SPEED SENSOR
CHECK VALVE
11a
OUTLET VALVE
12
C2
RELEASE PASSAGE
B2
WHEEL HYDRAULIC PASSAGE
REAR WHEEL CYLINDER
RH
REAR WHEEL SPEED SENSOR
54
RB
REAR WHEEL BRAKE

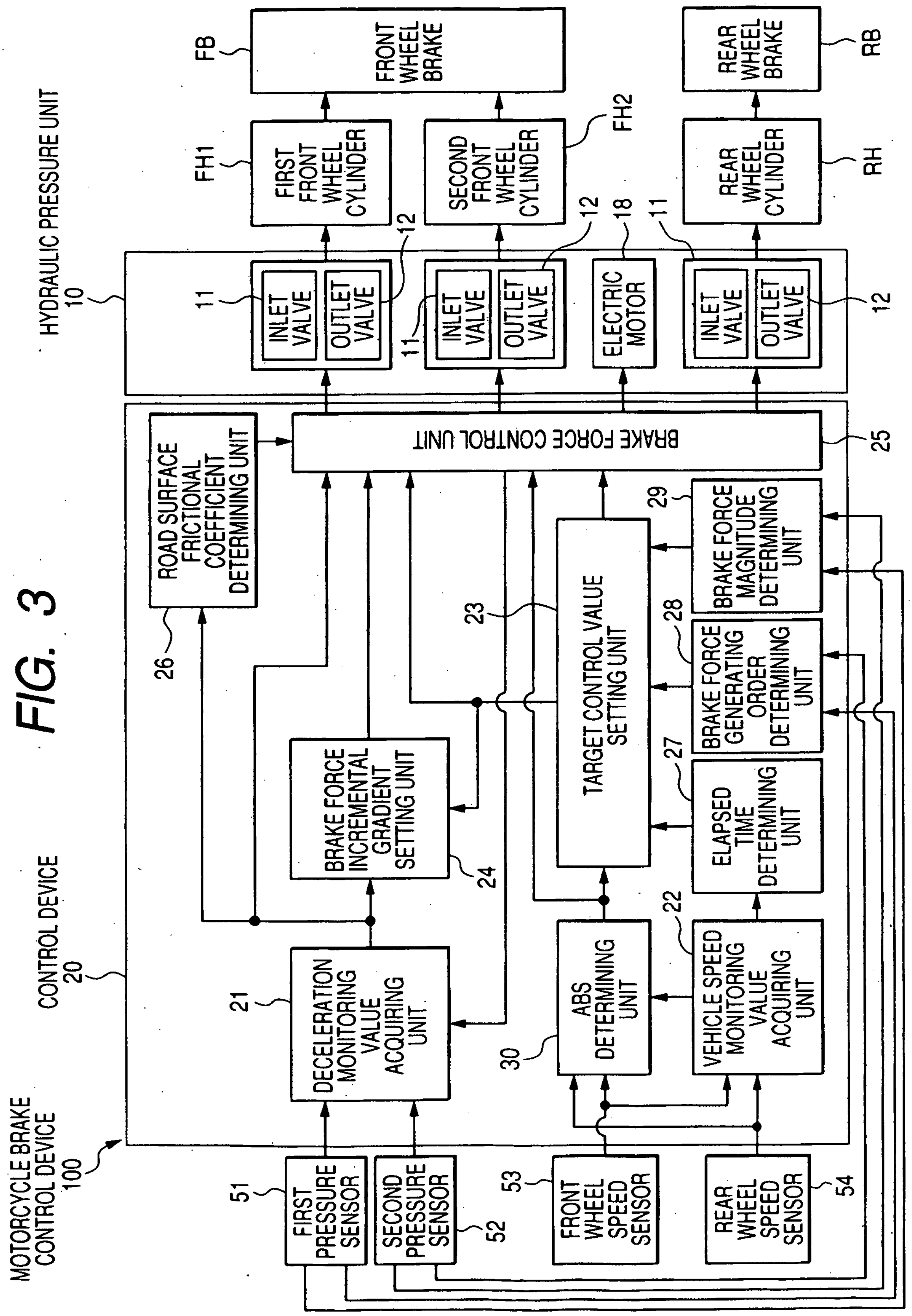
MOTORCYCLE BRAKE CONTROL DEVICE
100
CONTROL DEVICE
20
HYDRAULIC PRESSURE UNIT
10
FIRST PRESSURE SENSOR
51
SECOND PRESSURE SENSOR
52
FRONT WHEEL SPEED SENSOR
53
REAR WHEEL SPEED SENSOR
54
DECELERATION MONITORING VALUE ACQUIRING UNIT
21
VEHICLE SPEED MONITORING VALUE ACQUIRING UNIT
22
TARGET CONTROL VALUE SETTING UNIT
23
BRAKE FORCE INCREMENTAL GRADIENT SETTING UNIT
24
BRAKE FORCE CONTROL UNIT
25
ROAD SURFACE FRICTIONAL COEFFICIENT DETERMINING UNIT
26
ELAPSED TIME DETERMINING UNIT
27
BRAKE FORCE GENERATING ORDER DETERMINING UNIT
28
BRAKE FORCE MAGNITUDE DETERMINING UNIT
29
ABS DETERMINING UNIT
30
INLET VALVE
11
OUTLET VALVE
12
ELECTRIC MOTOR
18
FIRST FRONT WHEEL CYLINDER
FH1
SECOND FRONT WHEEL CYLINDER
FH2
REAR WHEEL CYLINDER
RH
FRONT WHEEL BRAKE
FB
REAR WHEEL BRAKE
RB

FIG. 3

FIG. 4A

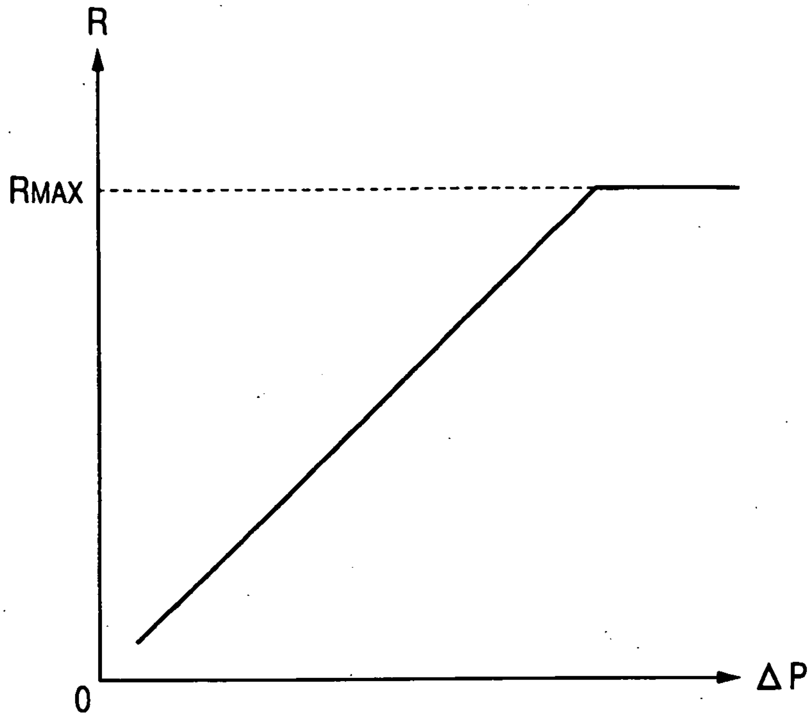


FIG. 4B

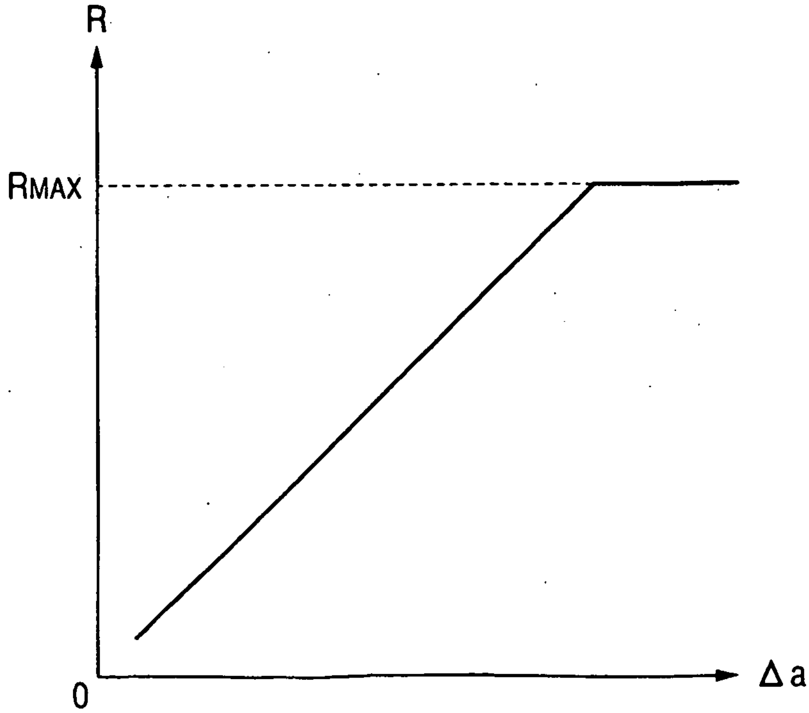

FIG. 5A

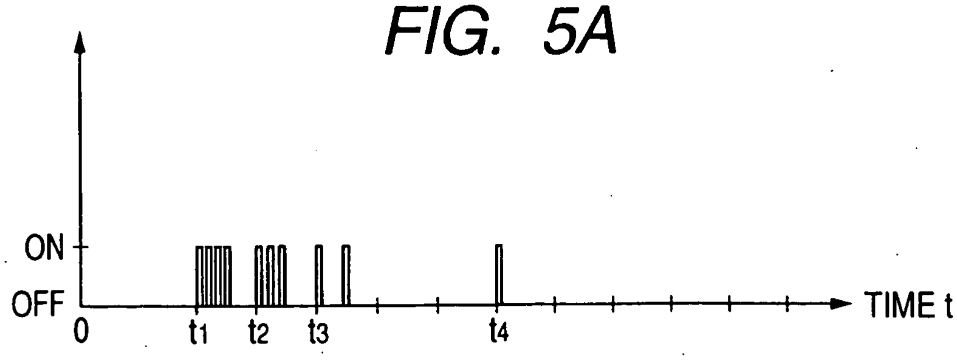


FIG. 5B

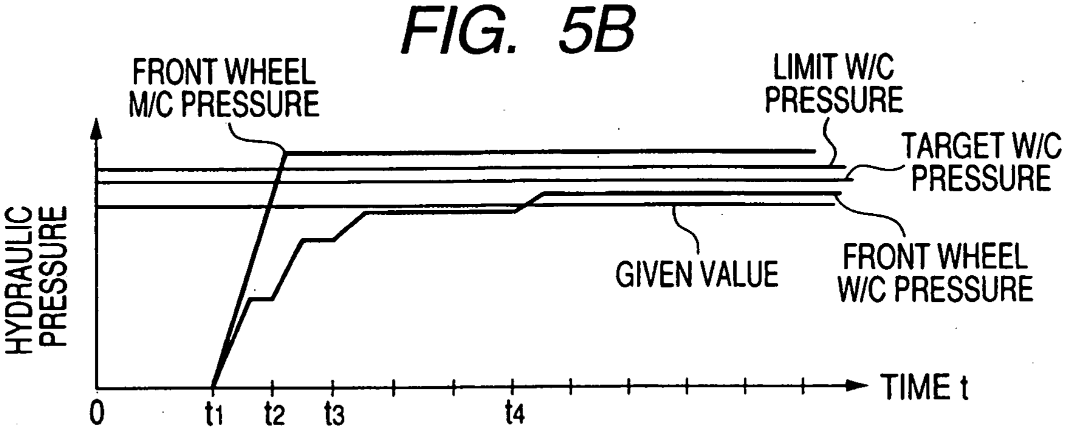


FIG. 5C

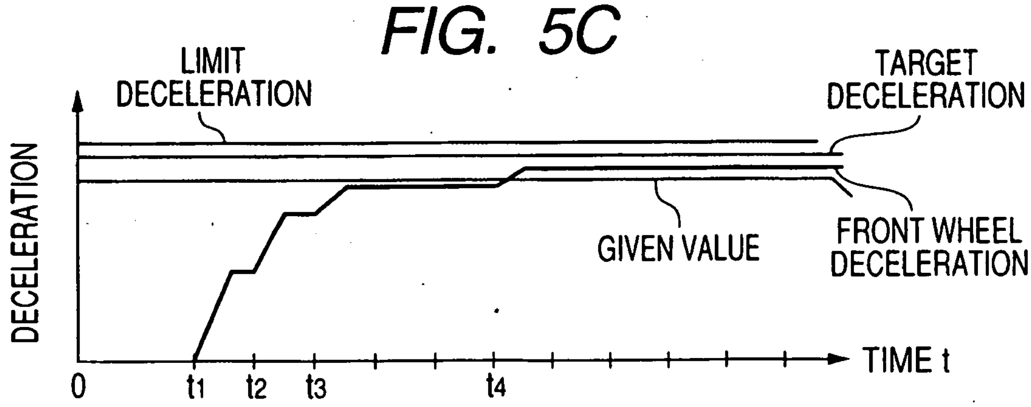


FIG. 5D

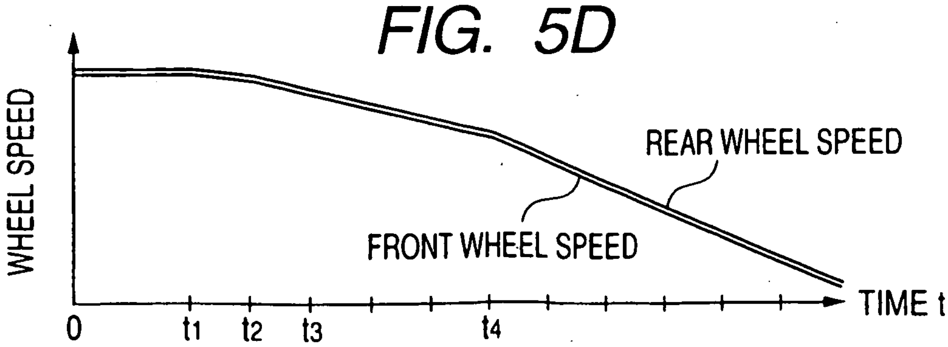

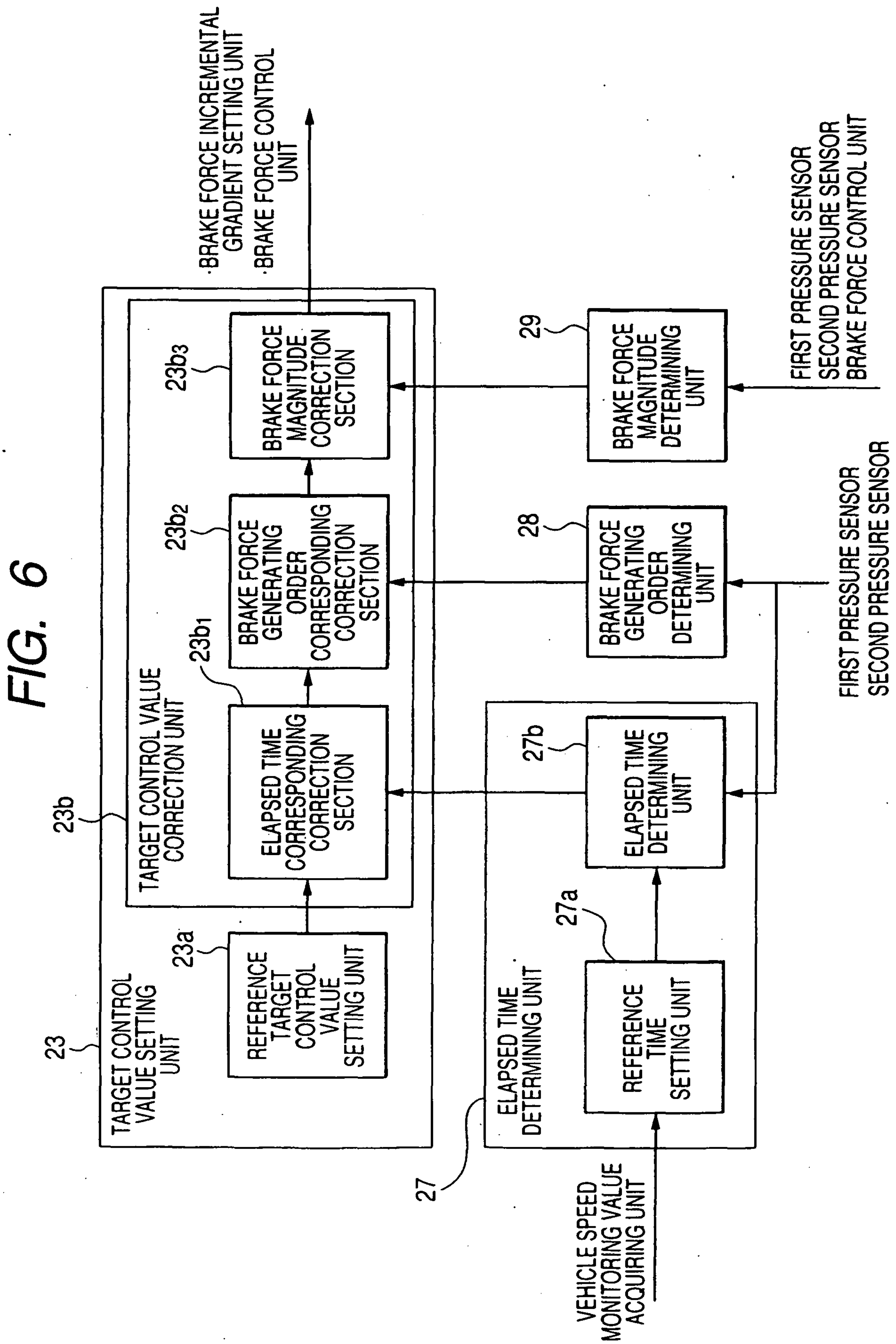
·BRAKE FORCE INCREMENTAL GRADIENT SETTING UNIT
·BRAKE FORCE CONTROL UNIT
23
TARGET CONTROL VALUE SETTING UNIT
23a
REFERENCE TARGET CONTROL VALUE SETTING UNIT
23b
TARGET CONTROL VALUE CORRECTION UNIT
23b1
ELAPSED TIME CORRESPONDING CORRECTION SECTION
23b2
BRAKE FORCE GENERATING ORDER CORRESPONDING CORRECTION SECTION
23b3
BRAKE FORCE MAGNITUDE CORRECTION SECTION
27
ELAPSED TIME DETERMINING UNIT
27a
REFERENCE TIME SETTING UNIT
27b
ELAPSED TIME DETERMINING UNIT
28
BRAKE FORCE GENERATING ORDER DETERMINING UNIT
29
BRAKE FORCE MAGNITUDE DETERMINING UNIT
FIRST PRESSURE SENSOR
SECOND PRESSURE SENSOR
BRAKE FORCE CONTROL UNIT
FIRST PRESSURE SENSOR
SECOND PRESSURE SENSOR
VEHICLE SPEED MONITORING VALUE ACQUIRING UNIT

FIG. 6

FIG. 7

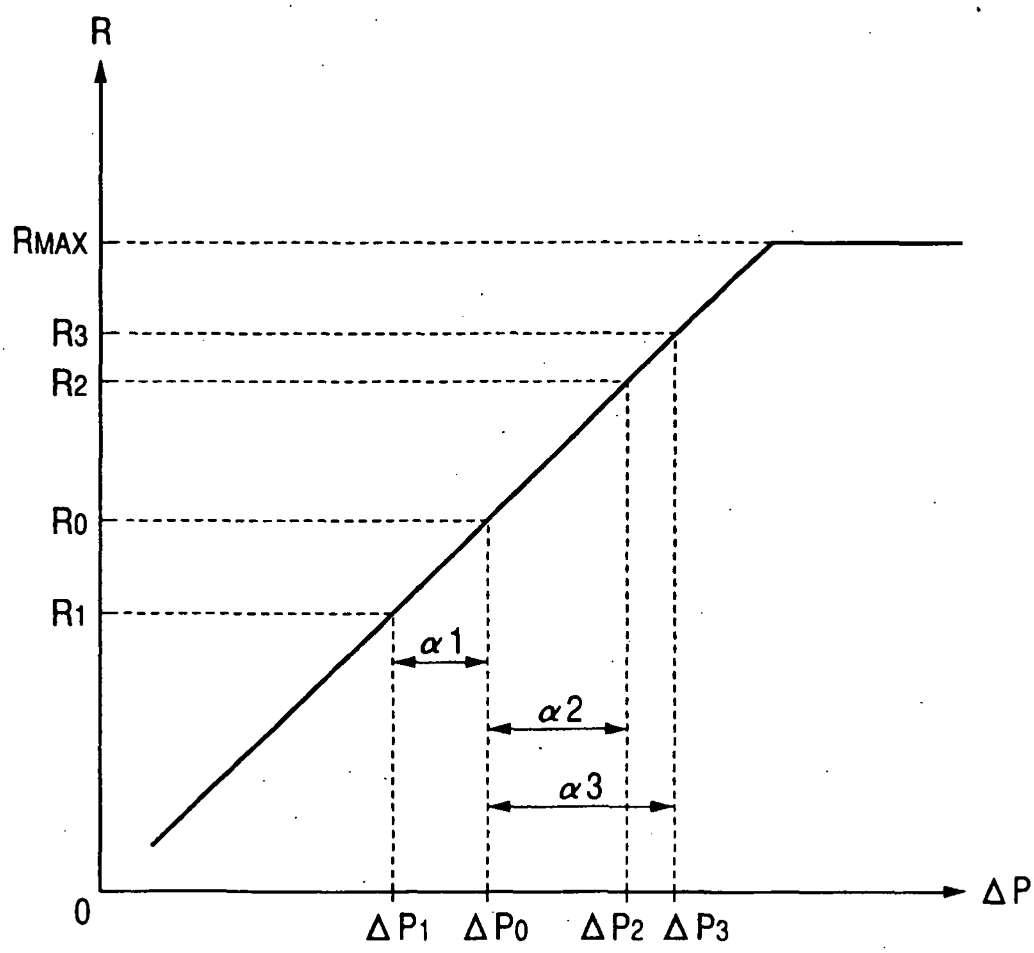

FIG. 8

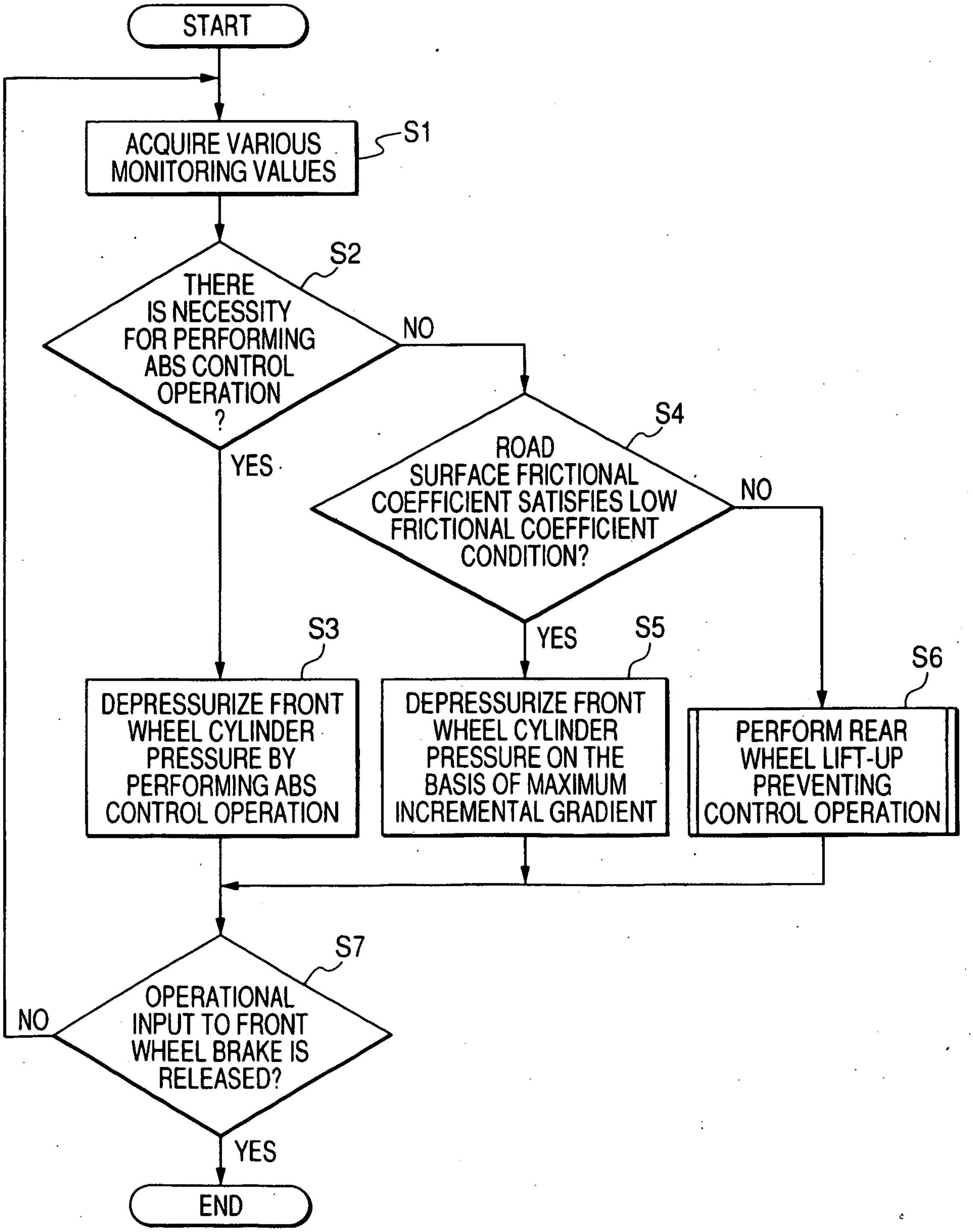
START
ACQUIRE VARIOUS MONITORING VALUES
S1
THERE IS NECESSITY FOR PERFORMING ABS CONTROL OPERATION ?
S2
NO
YES
ROAD SURFACE FRICTIONAL COEFFICIENT SATISFIES LOW FRICTIONAL COEFFICIENT CONDITION?
S4
NO
YES
S3
DEPRESSURIZE FRONT WHEEL CYLINDER PRESSURE BY PERFORMING ABS CONTROL OPERATION
S5
DEPRESSURIZE FRONT WHEEL CYLINDER PRESSURE ON THE BASIS OF MAXIMUM INCREMENTAL GRADIENT
S6
PERFORM REAR WHEEL LIFT-UP PREVENTING CONTROL OPERATION
S7
OPERATIONAL INPUT TO FRONT WHEEL BRAKE IS RELEASED?
NO
YES
END

FIG. 9

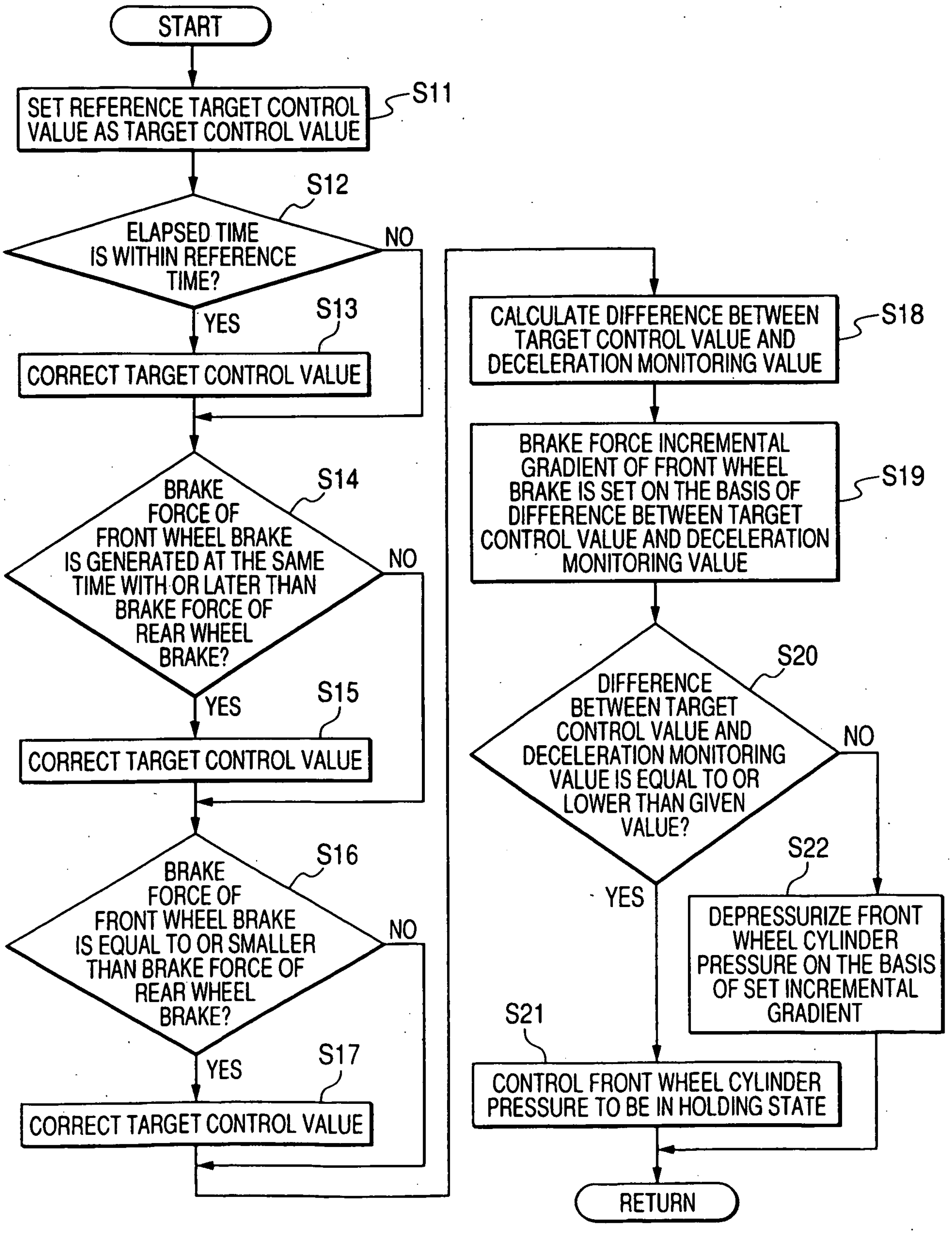
START
SET REFERENCE TARGET CONTROL VALUE AS TARGET CONTROL VALUE
S11
S12
ELAPSED TIME IS WITHIN REFERENCE TIME?
NO
YES
S13
CORRECT TARGET CONTROL VALUE
S14
BRAKE FORCE OF FRONT WHEEL BRAKE IS GENERATED AT THE SAME TIME WITH OR LATER THAN BRAKE FORCE OF REAR WHEEL BRAKE?
NO
YES
S15
CORRECT TARGET CONTROL VALUE
S16
BRAKE FORCE OF FRONT WHEEL BRAKE IS EQUAL TO OR SMALLER THAN BRAKE FORCE OF REAR WHEEL BRAKE?
NO
YES
S17
CORRECT TARGET CONTROL VALUE
CALCULATE DIFFERENCE BETWEEN TARGET CONTROL VALUE AND DECELERATION MONITORING VALUE
S18
BRAKE FORCE INCREMENTAL GRADIENT OF FRONT WHEEL BRAKE IS SET ON THE BASIS OF DIFFERENCE BETWEEN TARGET CONTROL VALUE AND DECELERATION MONITORING VALUE
S19
S20
DIFFERENCE BETWEEN TARGET CONTROL VALUE AND DECELERATION MONITORING VALUE IS EQUAL TO OR LOWER THAN GIVEN VALUE?
NO
S22
YES
DEPRESSURIZE FRONT WHEEL CYLINDER PRESSURE ON THE BASIS OF SET INCREMENTAL GRADIENT
S21
CONTROL FRONT WHEEL CYLINDER PRESSURE TO BE IN HOLDING STATE
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6255468 A
- EP 0537724 A